# EUROPÄISCHE PATENTSCHRIFT

(11) **EP 2 178 684 B1**
(45) Veröffentlichungstag und Bekanntmachung des Hinweises auf die Patenterteilung: **03.10.2012**
(21) Anmeldenummer: 08801150.7
(22) Anmeldetag: 14.08.2008
(51) Int. Cl.: B27C 3/04, B23B 39/16

(54) **MODULARTIGES SPINDELAGGREGAT**
MODULAR SPINDLE UNIT
ENSEMBLE MODULAIRE DE BROCHES

(30) Priorität: 14.08.2007 DE 102007038462; 30.07.2008 DE 102008035523
(43) Veröffentlichungstag der Anmeldung: 28.04.2010
(73) Patentinhaber: Wittenstein AG, 97999 Igersheim (DE)
(72) Erfinder: MEIER, Volker, 32676 Lügde (DE)
(74) Vertreter: von den Steinen, Axel
(86) Internationale Anmeldenummer: PCT/DE2008/001323
(87) Internationale Veröffentlichungsnummer: WO 2009/021498

(56) Entgegenhaltungen:
- CH-A- 287 310
- DE-A1- 10 259 285
- DE-A1- 19 950 715
- DE-U1- 20 115 251
- US-A- 4 869 626
- US-A- 4 932 117

## Beschreibung

Die Erfindung betrifft ein modulartiges Spindelaggregat zur Bildung eines Mehrfachspindel-Bearbeitungskopfes für eine Werkzeugmaschine nach dem Oberbegriff des Anspruchs 1.

Ein solches modulartiges Spindelaggregat ist aus US 4932117 A1 bekannt.

Aus dem Stand der Technik sind Mehrfachspindel-Bearbeitungsköpfe bekannt, die beispielsweise am Verfahrantrieb einer Werkzeugmaschine befestigt werden können. Auf diese Weise kann der Bearbeitungskopf insbesondere dreiachsig verfahren und positioniert werden. An den verschiedenen Werkzeugspindeln des Bearbeitungskopfes können jeweils Werkzeuge, beispielsweise Bohrer, Fräser oder Sägeblätter, befestigt und rotatorisch angetrieben werden. Insbesondere in der Möbelindustrie werden entsprechende Mehrfachspindel-Bearbeitungsköpfe eingesetzt, um rationell die Bearbeitung von plattenförmigen Bauteilen, beispielsweise Möbelfronten, Korpusteilen, Paneelen oder Isolierplatten, durchführen zu können.

Für die konstruktive Ausbildung solcher Mehrfachspindel-Bearbeitungsköpfe gibt es unterschiedliche Ansätze. Nach einer ersten Bauform befinden sich alle Werkzeugspindeln in einem festen Getriebeblock, der wiederum aus mehreren Lager- und Verteilerplatten besteht. Dieser Getriebeblock muss für jede Spindelanordnung neu konstruiert und gefertigt werden, welches hohe Kosten und Lieferzeiten bedingt. Nachträgliche Änderungen der Spindelanordnung und der Anzahl der Spindeln sind zudem nicht möglich.

Alternativ dazu sind auch Mehrfachspindel-Bearbeitungsköpfe bekannt, bei denen die einzelnen Antriebsspindeln in modulartigen Spindelaggregaten gelagert sind. Diese modulartigen Spindelaggregate werden dann zur Bildung des Mehrfachspindel-Bearbeitungskopfes zusammengesetzt und als integriertes Bauteil anschließend an der Werkzeugmaschine befestigt.

Die DE 102 59 285 A1 beschreibt modulartige Spindelaggregate, die ohne eigenen Antriebsmotor ausgebildet sind. Der Antrieb der einzelnen Antriebsspindeln erfolgt über ein Zahnradgetriebe, das seinerseits von einem Zentralmotor angetrieben wird. Nachteilig an dieser Konstruktion ist es, dass die einzelnen Arbeitsspindeln nicht einzeln und unabhängig voneinander antreibbar sind, so dass unterschiedliche Drehrichtungen, unterschiedliche Bearbeitungsleistungen und eine Einzelsensorik an den einzelnen Antriebsspindeln nicht realisierbar sind. Außerdem verursacht der Zahnradantrieb einen erheblichen Verschleiß und muss deshalb häufig gewartet werden.

Die DE 198 22 372 A1 beschreibt einen aus mehreren Spindelaggregaten zusammengesetzten Bearbeitungskopf, wobei die einzelnen Spindelaggregate auf einem gemeinsamen Modulträger befestigt sind. Jedes der Spindelaggregate ist mit einem eigenen Antriebsmotor zum rotatorischen Antrieb der Antriebsspindel ausgestattet. Um die einzelnen Spindelaggregate unabhängig voneinander relativ zum Modulträger ausfahren zu können, sind Axialverstellantriebe vorhanden. Die Axialverstellantriebe sind dabei parallel versetzt zu den einzelnen Spindelaggregaten angeordnet, was den Nachteil hat, dass die Spindelaggregate nicht entsprechend dicht am Modulträger anordenbar sind. Bohrbilder mit sehr geringen Bohrspindel-Abständen von beispielsweise nur 30 mm können auf diese Weise nicht realisiert werden.

Auch die DE 101 20 883 A1 beschreibt eine Bohreinheit mit mehreren Spindelaggregaten, die durch parallel zu den Spindelaggregaten versetzte Axialantriebe axial verstellt werden können.

Die DE 199 50 715 A1 beschreibt einen Bearbeitungskopf mit mehreren modulartigen Spindelaggregaten, bei denen die Axialverstellantriebe koaxial zur Mittelachse der Antriebsspindel angeordnet sind. Die Antriebsspindel durchgreift dabei den zum rotatorischen Antrieb vorgesehenen Antriebsmotor, wobei der Antriebsmotor selbst mit seinem Gehäuse des Spindelaggregats fixiert ist. Um die Axialverstellung der den Antriebsmotor durchgreifenden Antriebsspindel realisieren zu können, weisen der Rotor und ein Abschnitt der Antriebsspindel eine Vielkantverzahnung auf, an der die Antriebsmomente vom Rotor des Antriebmotors auf die Antriebsspindel übertragen werden können und zugleich ein Schiebesitz realisiert wird. Nachteilig an dieser konstruktiven Lösung ist es, dass die Vielkantverzahnung sehr aufwendig in der Herstellung ist. Auch wird der Durchmesser des Spindelaggregats durch die Vielkantverzahnung zwischen Antriebsspindel und dem Antriebsmotor stark vergrößert, so dass die Packungsdichte der Spindelaggregate am Bearbeitungskopf entsprechend geringer ausfällt. Außerdem kann es durch die Verzahnung zwischen dem Antriebsmotor und der Antriebsspindel zu unerwünschten Drehschwingungen kommen.

Die US 4,932,117 A betrifft eine Vorrichtung zum selektiven und gleichzeitigen Bohren einer Mehrzahl von Vertiefungen in flächige Bauteile, wie beispielsweise Platinen. Dabei wird ein Spindelaggregat vorgeschlagen, welches über einen Steuerriemen eine Verbindung zwischen einem seitlich angeflanschten Motor und einer Kugelwindemutter eines Kugelwindetriebs in einem oberen Gehäuse herstellt. Das untere Ende des Kugelwindetriebs ist dabei mit dem oberen Ende eines Bohrmoduls, welches sich in einem unteren Gehäuse befindet, verbunden, wodurch die Rotation des angeflanschten Motors zu einer Höhenverstellung des Bohrmoduls führt. Das Bohrmodul wird dabei von einem hydraulischen Motor rotatorisch angetrieben. Nachteilig an diesem Stand der Technik ist dabei, dass die mit der Vorrichtung ausführbaren Arbeiten sich auf selektives vertikales Bohren beschränken.

Die DE 201 15 251 U1 beschreibt eine Bohreinheit für Holzbearbeitungsmaschinen, bei der eine Mehrzahl von durch ein Stellglied unabhängig voneinander betätigbare Hubeinheiten in einem in Vorschubrichtung verfahrbaren Hauptkörper angeordnet sind, wobei die freien Endbereiche von in der Vorschubrichtung bis zu einer Arbeitsstellung ausfahrbaren Schubstangen der Hubeinheiten mit Spanneinrichtungen für Bohrwerkzeuge versehen sind und mit einer motorischen Drehantriebsvorrichtung ausgestattet sind. Bei in der Arbeitsstellung befindlichen Schubstangen kommt dabei zumindest während eines Bohrvorgangs ein verriegelndes Arretierungsmittel zum Einsatz. Die vorgesehenen motorischen Drehantriebsvorrichtungen erlauben auch hier nur das Ausführen von Bohrvorgängen oder dergleichen in Verfahrrichtung der Hubeinheiten. Außerdem ist eine modulare Montage von Spindelaggregaten nicht möglich. Eine Veränderung der Spindelaggregatanordnung ist deshalb nur mit hohem Aufwand möglich.

Die CH 287 310 A betrifft eine motorisch angetriebene Astlochbohrmaschine, mit mehreren Motoren, die mit einer senkrechten Welle angeordnet und in senkrechten Führungen höhenverstellbar sind. Die Welle ist als Bohrspindel ausgeführt und die Höhenverstellung wird mittels eines jeweiligen Hebels vorgenommen. Die offenbarte Vorrichtung eignet sich nicht für die Konstruktion eines kompakten Spindelaggregates, welches dicht gepackt und vielfältig und flexibel mit anderen Spindelaggregaten kombiniert werden kann. Zudem können nur einfache Vertikalbohrungen vorgenommen werden.

Die US 4,869,626 A handelt von einem Hochgeschwindigkeitsbohrmodul, welches durch einen elektrostatischen Linearmotor entlang der Rotationsachse einer Bohrspindel bewegt werden kann, wobei ein aufwändiges System von Luft- und Kugellagern für die Verbindungen zwischen rotierenden und nicht rotierenden Teilen des Moduls vorgeschlagen wird. Der entlang der Rotationsachse verschiebbare Spindelrotor wird dabei unabhängig vom Stator des Antriebsmotors entlang der Rotationsachse verschoben. Wodurch letztlich auch hier nur vertikale Bohrungen vorgenommen werden können.

Aufgabe der vorliegenden Erfindung ist es, ein neues modulartiges Spindelaggregat zur Bildung eines Mehrfachspindel-Bearbeitungskopfes für eine Werkzeugmaschine vorzuschlagen, das die oben beschriebenen Nachteile aus dem Stand der Technik vermeidet. Ziel ist es dabei insbesondere, einen einfachen Aufbau des Spindelaggregats zu realisieren und eine hohe Packungsdichte der Spindelaggregate am Bearbeitungskopf zu ermöglichen. Weiter ist es Aufgabe der Erfindung trotz einfachem Aufbau der Spindelaggregate eine vielfältige Einsetzbarkeit zur Bildung komplexer und multifunktionaler Mehrfachspindel-Bearbeitungsköpfe zu ermöglichen.

Diese Aufgabe wird durch ein Spindelaggregat nach der Lehre des Anspruchs 1 gelöst.

Vorteilhafte Ausführungsformen der Erfindung sind Gegenstand der Unteransprüche.

Die Erfindung beruht einerseits auf dem Grundgedanken, dass zwischen dem Antriebsmotor und der Antriebsspindel eine axiale Verstellbewegung vermieden werden soll. Auf diese Weise kann die kostenaufwendige und einen großen Bauraum beanspruchende Drehmomentübertragung zwischen Antriebsmotor und Antriebsspindel, die zugleich einen Axialversatz zwischen Antriebsmotor und Antriebsspindel ermöglicht, eingespart werden. Um dieses Ziel zu erreichen, ist der Antriebsmotor des erfindungsgemäßen Spindelaggregats axial verschiebbar im Modulgehäuse des Spindelaggregats gelagert und kann durch Antrieb der Axialstellvorrichtung zusammen mit der Antriebsspindel längs der gemeinsamen Mittelachse axial im Modulgehäuse verschoben werden. Dies bedeutet mit anderen Worten, dass der Antriebsmotor und die Antriebsspindel hinsichtlich der axialen Verstellung eine Einheit bilden. Es ergeben sich sehr schlanke Spindelaggregate, die kostengünstig hergestellt werden können. Durch Serienproduktion, Vormontage und Vortesten der Spindelaggregate können die Spindelaggregate mit geringer Typenvarianz vorgefertigt und bei Bedarf sehr schnell zu verschiedensten Bauformen von Mehrfachspindel-Bearbeitungsköpfen zusammengesetzt werden. Außerdem werden Drehschwingungen an der Antriebsspindel vermieden. Soll die Bauform eines bestehenden Bearbeitungskopfes verändert werden, ist dies durch einfache Demontage der Spindelaggregate und anschließende Neumontage ohne weiteres möglich, da jedes Spindelaggregat eine eigene Funktionseinheit bildet.

Zudem sieht der Grundgedanke der Erfindung vor, dass zumindest an einem Spindelaggregat des Bearbeitungskopfes ein Werkzeugträger angeordnet ist, der einen eigenen Antriebsmotor umfasst, um eine separate Antriebsspindel im Werkzeugträger rotatorisch antreiben zu können. Dies bedeutet mit anderen Worten, dass das Spindelaggregat dann im Wesentlichen nur noch zur Axialverstellung des Werkzeugträgers dient, wohingegen der rotatorische Antrieb des Werkzeugs durch den Antriebsmotor im Werkzeugträger übernommen wird. Auf diese Weise kann eine große Vielfalt von Funktionen, beispielsweise Horizontalbohren, Fräsen, Sägen, realisiert werden.

Eine besonders kostengünstig und kompakt zu realisierende Bauform ergibt sich, wenn die Rotorachse des Antriebsmotors und die Antriebsspindel stoffschlüssig miteinander verbunden sind. Dazu können die Rotorachse des Antriebsmotors und die Antriebsspindel beispielsweise aus einem Werkstück einstückig gefertigt sein. Drehmomentübertragungselemente zwischen der Rotorachse des Antriebsmotors und der Antriebsspindel entfallen auf diese Weise, da diese stoffschlüssig miteinander verbunden sind.

Für den Betrieb eines Antriebsmotors ist insbesondere die Übertragung von Antriebsenergie und/oder die Übertragung von Informationen notwendig. Üblicherweise wird die Antriebsenergie in der Form von elektrischer Energie an den Antriebsmotor übertragen. Aufgrund der axial verschiebbaren Lagerung des Antriebsmotors im Modulgehäuse können fest verlegte Versorgungsleitungen zur Übertragung der Antriebsenergie nicht eingesetzt werden. Der Einsatz von Schleifkontaktschienen ist zwar möglich, erfordert jedoch einen hohen konstruktiven Aufwand und verursacht zudem erhebliche Sicherheitsprobleme. Es ist deshalb besonders vorteilhaft, wenn die Versorgungsleitung zur Übertragung von Antriebsenergie ein Längenausgleichselement zur Anpassung der Länge der Versorgungsleitung aufweist. Durch das Längenausgleichselement kann die Geometrie der Versorgungsleitung an die jeweilige Lage des Antriebsmotors im Modulgehäuse angepasst werden.

Handelt es sich um einen elektrisch angetriebenen Antriebsmotor, so kann die Antriebsenergie über ein Versorgungskabel übertragen werden. Zur Realisierung des Längenausgleichelements kann das Versorgungskabel einen spiralförmig gewundenen Abschnitt aufweisen. Aufgrund seiner Elastizität kann der spiralförmig gewundene Versorgungskabelabschnitt sich innerhalb bestimmter Längengrenzen zusammenziehen bzw. strecken und dadurch den notwendigen Längenausgleich realisieren.

Aufgrund seiner Flexibilität muss das spiralförmig gewundene Versorgungskabel am Spindelaggregat geführt werden, um Betriebsstörungen zu vermeiden. Diese Führung des spiralförmig gewundenen Versorgungskabels kann in einfacher Weise dadurch realisiert werden, dass das Versorgungskabel eine Antriebsstange der Axialverstelleinrichtung in mehreren Windungen umgreift. Die Antriebsstange kann dabei beispielsweise in der Art einer Kolbenstange ausgebildet sein, wenn es sich um eine elektromechanisch, pneumatisch bzw. hydraulisch angetriebene Axialstellvorrichtung handelt. Die Antriebsstange durchgreift also die Windungen des Versorgungskabels, so dass das Versorgungskabel auf der Antriebsstange exakt geführt ist.

Die konstruktive Gestaltung dieses Modulgehäuses der einzelnen Spindelaggregate ist prinzipiell beliebig. Nach einer bevorzugten Ausführungsform umfasst das Modulgehäuse zwei Gehäuseplatten und zumindest zwei Stabachsen. Die Gehäuseplatten bilden dabei jeweils die Axialenden des Spindelaggregats. Die Stabachsen verbinden die beiden Gehäuseplatten miteinander und halten die Gehäuseplatten auf einem festen Abstand. Auf diese Weise wird eine Art offener Käfig gebildet, der das Modulgehäuse im Wesentlichen bildet und in dem die unterschiedlichen Bestandteile des Spindelaggregats gehäusefest, drehfest und/oder axial verschiebbar gelagert werden können. Aufgrund der Verwendung schlanker Stabachsen können die Rasterabmessungen der Spindelaggregate sehr klein gehalten werden, um auf diese Weise eine hohe Packungsdichte der Spindelaggregate am Bearbeitungskopf zu realisieren.

Um eine drehfeste und zugleich axial verschiebbare Lagerung des Antriebsmotors im Modulgehäuse einfach zu realisieren, kann das Gehäuse des Antriebsmotors zumindest zwei Ausnehmungen aufweisen, durch die sich die zumindest zwei Stabachsen erstrecken. Auf diese einfache Weise wird eine Axiallagerung des Gehäuses des Antriebmotors im Modulgehäuse realisiert, wobei sich der Antriebsmotor am Modulgehäuse abstützen kann und zugleich im Modulgehäuse axial verschiebbar ist.

Bei der Herstellung von Mehrfachspindel-Bearbeitungsköpfen ist es vielfach erforderlich, dass die Antriebsspindeln jeweils paarweise oder als Mehrfachkombination vorgesehen sind. Um diese Bauformen von Mehrfachspindel-Bearbeitungsköpfen, bei denen mehrere Antriebsspindeln jeweils eine gemeinsame Gruppe bilden, einfach realisieren zu können, ist es besonders vorteilhaft, wenn ein Spindelaggregat mehrere Antriebsspindeln, insbesondere zwei oder vier Antriebsspindeln, mit jeweils einem zugeordneten Antriebsmotor und mit jeweils einer zugeordneten Axialstellvorrichtung umfasst. Auf diese Weise bildet das Spindelaggregat eine integrierte Modulbaugruppe, die mehrere Antriebsspindeln aufweist. Diese integrierten Modulbaugruppen können dann wiederum vormontiert und vorgetestet werden und in einfacher Weise zu Mehrfachspindel-Bearbeitungsköpfen zusammengesetzt werden.

Für den ordnungsgemäßen Betrieb eines Mehrfachspindel-Bearbeitungskopfes ist es von großer Bedeutung, dass die Antriebsspindel exakt geführt ist, da ansonsten eine korrekte Positionierung des Werkzeuges relativ zu der Bearbeitungsstelle am Werkstück, beispielsweise zur Herstellung eines Bohrlochs, nicht gewährleistet ist. Um dies in einfacher Weise zu realisieren, ist es besonders vorteilhaft, wenn am Antriebsmotor eine Lagerhülse befestigt ist, in der die Antriebsspindel frei drehbar und/oder axial feststehend gelagert ist. Die Lagerung der Antriebsspindel in der Lagerhülse und der Antriebsmotor bilden auf diese Weise eine mechanisch verbundene Einheit, so dass Maßabweichungen zwischen Antriebsmotor und der Lagerung der Antriebsspindel ausgeschlossen sind. Dies ist bei dem erfindungsgemäßen Spindelaggregat insbesondere deshalb von Bedeutung, da der Antriebsmotor zusammen mit der Antriebsspindel axial verschiebbar ist.

Die Lagerhülse zur Lagerung der Antriebsspindel kann dabei zugleich auch zur Lagerung des Rotors des Antriebsmotors eingesetzt werden, so dass auf eine separate Lagerung des Rotors des Antriebmotors verzichtet werden kann. Diese Bauform ist insbesondere dann von Vorteil, wenn der Rotor des Antriebsmotors und die Antriebsspindel einstückig miteinander verbunden sind, beispielsweise durch Verwendung einer durchgehenden Achse.

Um ein Auswandern des im Eingriff befindlichen Werkzeugs relativ zur Aggregatsmittelachse zu vermeiden, kann die Gehäuseplatte des Modulgehäuses eine Ausnehmung aufweisen. In dieser Ausnehmung wird die Gehäuseplatte von der Lagerhülse durchgriffen und geführt, so dass die Lagerhülse nicht zur Seite weggedrückt werden kann.

Besonders exakt wird die Lagerhülse in der Ausnehmung der Gehäuseplatte geführt, wenn die Ausnehmung einen Schiebelagersitz bildet. Mit anderen Worten bedeutet dies, dass die Ausnehmung dann ein Gleitlager für die Lagerhülse bildet, in der die Lagerhülse axial verschiebbar ist. Die Mittelachse der Lagerhülse wird durch die Ausnehmung radial auf die Aggregatsmittelachse zentriert.

Ist am Spindelaggregat ein Werkzeug befestigt, das sich an einem Werkstück im Eingriff befindet, müssen vielfach hohe Axialkräfte in der Bearbeitungszone aufgebracht werden, beispielsweise wenn mit einem Bohrer ein Bohrloch eingebracht wird. Um diese hohen Axialkräfte mit der axial verstellbaren Antriebsspindel einfach am Modulgehäuse des Spindelaggregats abfangen zu können, ist es besonders vorteilhaft, wenn die Lagerhülse eine Fixiernut aufweist. In diese Fixiernut kann dann ein Riegel einer Verriegelungseinrichtung formschlüssig eingreifen und die Lagerhülse am Modulgehäuse auf diese Weise axial fixieren. Durch die Verriegelung des axial verstellbaren Teils am Modulgehäuse wird insbesondere auch die Axialstellvorrichtung entlastet, die nach der Verriegelung keine Axialkräfte mehr aufnehmen muss. Entsprechend schlankere Axialstellvorrichtung können dadurch eingesetzt werden.

Eine besonders kompakt und klein bauende Verriegelungseinrichtung kann realisiert werden, wenn die Ver- und Entriegelung mittels einer Magnetstelleinrichtung erfolgt.

Außerdem ist es besonders vorteilhaft, wenn die Verriegelungseinrichtung an der Außenseite des Modulgehäuses, insbesondere an der Außenseite der die Lagerhülse axial führenden Gehäuseplatte, angeordnet ist. Auf diese Weise wird kein zusätzlicher Bauraum zwischen den Spindelaggregaten benötigt und somit die maximale Packungsdichte der Spindelaggregate am Mehrspindel-Bearbeitungskopf nicht beeinträchtigt.

Die Axialstellvorrichtung sollte bevorzugt in der Art eines pneumatischen Stellzylinders mit axial antreibbaren Antriebskolben ausgebildet sein.

Die Kolbenstange des Antriebskolbens kann dabei mit ihrem freien Ende am Gehäuse des Antriebsmotors mechanisch angeschlossen sein, um auf diese Weise den Antriebsmotor und die daran anschießende Antriebsspindel axial zu verstellen.

Um eine kompaktere Bauweise des Spindelaggregats zu ermöglichen, ist es nach einer bevorzugten Ausführungsform vorgesehen, dass das Modulgehäuse den pneumatischen Stellzylinder und das Gehäuse des Antriebsmotors den pneumatischen Antriebskolben des Spindelaggregats bilden. Dies bedeutet mit anderen Worten, dass eine weitere Stufe der Funktionsintegration vorgenommen wird, so dass die Bestandteile des pneumatischen Axialantriebs durch bereits vorhandene Bauteile, nämlich durch das Modulgehäuse und das Gehäuse des Antriebsmotors, gebildet werden. Das Gehäuse des Antriebsmotors eignet sich dabei von vorneherein sehr gut zur Bildung des pneumatischen Antriebskolbens, da das Gehäuse des Antriebsmotors regelmäßig eine zylindrische Form aufweist und damit ohne weiteres in einer zylindrischen Aufnahme des Modulgehäuses abgedichtet werden kann. Vorteil dieser Ausführungsform ist es, dass eine Vielzahl von Bauteilen zur Bildung der pneumatischen AxialStellvorrichtung entfallen. Eine Kolbenstange zur Übertragung des Axialvortriebs vom Antriebskolben auf den Antriebsmotor entfällt ebenfalls. Insgesamt ergibt sich eine sehr kompakte Bauweise.

Soweit der Antriebskolben der pneumatischen Axial-Stelleinrichtung vom Gehäuse des Antriebsmotors gebildet wird, sollen die Leitungen zur Übertragung der Antriebsenergie zwischen dem Modulgehäuse und dem Antriebsmotor durch den pneumatischen Stellzylinder verlaufen.

Um ein Durchdrehen des rotatorisch angetriebenen Antriebsmotors relativ zu dem den pneumatischen Stellzylinder bildenden Modulgehäuse zu verhindern, kann alternativ zu der Verwendung von Führungsstangen als Drehmomentabstützung auch eine formschlüssig wirkende Kombination aus einer Stütznut und einem Stützelement Verwendung finden. Die Stütznut wird dabei in die zylindrische Kolbenfläche des pneumatischen Stellzylinders eingearbeitet, so dass zur Drehmomentabstützung das am Gehäuse des Antriebsmotors befestigte Stützelement formschlüssig in diese Stütznut eingreifen kann. Durch diese Integration der Drehmomentabstützung in den Stellzylinder der pneumatischen AxialStellvorrichtung wird eine noch kompaktere Bauweise ermöglicht, da insbesondere die Führungsstäbe entfallen können.

Um eine möglichst kompakte Bauweise zu realisieren, ist es besonders vorteilhaft, wenn die pneumatische Steuerungseinheit zur Positionierung des Antriebskolbens im Stellzylinder am hinteren Ende des Modulgehäuses angeordnet ist. Prismatische beziehungsweise zylindrische Querschnitte der Steuerungseinheit sollten dabei mit dem prismatischen beziehungsweise zylindrischen Querschnitt des Modulgehäuses fluchten, so dass bei Anordnung mehrerer Spindelaggregate nebeneinander keine Überstände an den einzelnen Spindelaggregaten vorhanden sind und somit eine sehr enge Packung der Spindelaggregate ermöglicht wird.

Der Antriebsmotor des Spindelaggregats ist bevorzugt in der Art eines regelbaren Servomotors mit Sensorik ausgebildet. Insbesondere ist es vorteilhaft, wenn die Drehrichtung des Spindelaggregats frei gewählt werden kann, um die Drehrichtung der einzelnen Werkzeuge am Mehrfachspindel-Bearbeitungskopf unabhängig voneinander bestimmen zu können. Außerdem können Informationen zur Beschreibung des Bearbeitungsvorgangs durch eine entsprechende Sensorik erfasst und ausgelesen werden. Somit ist es beispielsweise möglich, den Werkzeugbruch oder den Verschleiß des Werkzeugs am Spindelaggregat zu erkennen und entsprechend zu reagieren. Eine Lagesensorik ermöglicht es insbesondere auch, jedes einzelne Werkzeug unabhängig von anderen Werkzeugen am Mehrfachspindel-Bearbeitungskopf so zu positionieren, dass ein Werkzeugwechsel durchgeführt werden kann.

Um die Funktionsintegration noch weiter zu erhöhen, kann die elektronische Steuerungseinheit des Servomotors am zugeordneten Modulgehäuse befestigt sein. Alternativ dazu ist es jedoch auch denkbar, dass die Steuerungseinheit über ein Kabel mit dem Servomotor verbunden ist und an einer völlig anderen Stelle angeordnet wird.

Zur lagerichtigen Befestigung mehrerer Spindelaggregate am Mehrspindel-Bearbeitungskopf kann ein Modulgehäuseträger vorgesehen sein. Die einzelnen Spindelaggregate werden jeweils unabhängig voneinander und einzeln in exakter Positionierung am Modulgehäuseträger befestigt, so dass die Addition von Lagefehlern, wie sie auftreten, wenn die einzelnen Spindelaggregate aneinander befestigt werden, vermieden wird.

Um eine möglichst genaue Positionierung der Spindelaggregate am Modulgehäuseträger zu realisieren, kann am Modulgehäuseträger für jedes Spindelaggregat eine Ausnehmung vorgesehen sein. Diese Ausnehmung wird dann von der Lagerhülse der Antriebsspindel durchgriffen und bildet einen Schiebelagersitz, in dem die Lagerhülse axial verschiebbar ist. Auf diese Weise wird durch die Lage der Ausnehmungen im Modulgehäuseträger eine exakte radiale Positionierung der Aggregatsmittelachse realisiert. Jede einzelne Aggregatsmittelachse wird dabei unabhängig von den anderen Spindelaggregaten am Modulgehäuseträger positioniert und zentriert.

Um in einfacher Weise die Befestigung der Spindelaggregate am Modulgehäuseträger zu ermöglichen, können für jedes Spindelaggregat jeweils zumindest zwei Ausnehmungen am Modulgehäuseträger vorgesehen sein. In diesen Ausnehmungen werden dann die Enden der Stabachsen des Modulgehäuses festgelegt.

Besonders ist es vorteilhaft, wenn bei Ausführungsformen des Modulgehäuses mit jeweils zwei Stabachsen im Modulgehäuseträger für jedes Spindelaggregat jeweils vier Ausnehmungen zur Befestigung der Stabachsen vorgesehen sind. Diese vier Ausnehmungen sollten dabei bevorzugt an den Ecken eines Quadrats angeordnet sein. Somit kann das Spindelaggregat mit seinen beiden Stabachsen in unterschiedlichen Relativpositionierungen am Modulgehäuseträger befestigt werden, da die Stabachsen jeweils diagonal versetzt an den vier Ausnehmungen befestigbar sind.

Um die Modularität weiter zu erhöhen, kann auch der Modulgehäuseträger aus mehreren standardisierten Modulbauteilen zusammengesetzt sein. Derartig modulartig aus einem Baukastensystem aufgebaute Modulgehäuseträger können ganz grundsätzlich und unabhängig von der Gestaltung der Spindelaggregate beim Aufbau von Mehrfachspindel-Bearbeitungsköpfen Verwendung finden, da durch Verwendung der standardisierten Modulbauteile eine Vielzahl von geometrischen Formen von Modulgehäuseträgern erzeugt werden kann, wobei die Verwendung weniger Gleichteile eine kostengünstige und einfache Fertigung erlaubt. Durch die Verwendung der standardisierten Modulbauteile wird es also ermöglicht, dass die geometrische Form des Bearbeitungskopfs erst durch die gewählte Kombination der Modulbauteile festgelegt wird, so dass eine Fertigung von auftragsbezogenen komplexen Einzelbauteilen zur Herstellung des die Spindelaggregate tragenden Gehäuseträgers vermieden wird.

Zur Bildung eines solchen Baukastensystem bieten sich insbesondere standardisierte Plattenelemente an. Bereits mit sehr wenigen solcher standardisierter Plattenelemente, an denen jeweils zwei, drei, vier oder mehr Spindelaggregate befestigbar sind, können Mehrfachspindel-Bearbeitungsköpfe mit beinahe beliebiger Geometrie realisiert werden. Die einzelnen Plattenelemente werden dazu entsprechend der gewünschten Geometrie in zumindest zwei Lagen zusammengelegt, wobei die einzelnen Plattenelemente in den benachbarten Lagen jeweils überlappend angeordnet sind, um einen mechanisch festen Übergang zwischen den einzelnen Plattenelementen zu bilden. Anschließend werden die Plattenelemente des Modulgehäuseträgers fest miteinander verbunden, beispielsweise miteinander verklebt. Im Ergebnis kann somit aus wenigen standardisierten Modulbauteilen eine große Vielzahl von Geometrien des Mehrfachspindel-Bearbeitungskopfs realisiert werden.

An den erfindungsgemässen Spindelaggregaten, an denen ein Werkzeugträger mit eigenem Antriebsmotor vorgesehen ist, kann der Antriebsmotor entfernt, also ausgebaut bzw. weggelassen werden, da ein rotatorischer Antrieb des Werkzeugträgers vielfach nicht notwendig ist. Werkzeugträger mit eigenem Antriebsmotor können ganz grundsätzlich und unabhängig von der Gestaltung der Spindelaggregate beim Aufbau von Mehrfachspindel-Bearbeitungsköpfen Verwendung finden. Dadurch ist es insbesondere möglich, komplexe Fertigungsfunktionen, beispielsweise schwenkbare C-Achsen, in konventionelle Spindelreihen, insbesondere Vertikalbohrspindelreihen, zu integrieren. So können Sonderkonstruktionen für diese komplexen Fertigungsfunktionen vermieden werden. Ebenso kann das Spindelaggregat auch als Einzelaggregat eingesetzt werden, wie zum Beispiel bei separaten Mehrfachbearbeitungsstationen.

Besonders vorteilhaft ist es, wenn die Antriebsspindel im Werkzeugträger im rechten Winkel zur Antriebsspindel des Spindelaggregats im Bearbeitungskopf verläuft. Insbesondere können auf diese Weise Horizontalbohrer, Horizontalfräser oder Sägeblattfunktionen realisiert werden.

Soweit der Werkzeugträger um eine Schwenkachse eines Spindelaggregats schwenkbar ist, kann der Schwenkantrieb durch den rotatorischen Antrieb einer der Antriebsspindeln im Bearbeitungskopf realisiert werden.

Verschiedene Ausführungsformen der Erfindung sind in den Zeichnungen schematisch dargestellt und werden nachfolgend beispielhaft erläutert.

Es zeigen:
- Fig. 1: eine erste Ausführungsform eines Spindelaggregats in perspektivischer Ansicht;
- Fig. 2: das Spindelaggregat gemäß Fig. 1 in seitlicher Ansicht;
- Fig. 3: das Spindelaggregat gemäß Fig. 2 im Längsschnitt entlang der Schnittlinie I - I;
- Fig. 4: eine Verriegelungseinrichtung zur Verwendung am Spindelaggregat gemäß Fig. 1 in perspektivischer Ansicht;
- Fig. 5: die Verriegelungseinrichtung gemäß Fig. 4 im Längsschnitt;
- Fig. 6: die Verriegelungseinrichtung gemäß Fig. 4 bei Anordnung an einem Spindelaggregat in perspektivischer Ansicht;
- Fig. 7: eine zweite Ausführungsform eines Spindelaggregats mit zwei Antriebsspindeln und zwei Antriebsmotoren in perspektivischer Ansicht;
- Fig. 8: das Spindelaggregat gemäß Fig. 7 in seitlicher Ansicht;
- Fig. 9: das Spindelaggregat gemäß Fig. 8 im Längsschnitt entlang der Schnittlinie II-II;
- Fig. 10: einen Mehrfachspindel-Bearbeitungskopf hergestellt durch Montage mehrerer Spindelaggregate gemäß Fig. 7 an einem Modulgehäuseträger in perspektivischer Ansicht von oben;
- Fig. 11: ein standardisiertes Modulbauteil zur Herstellung von Modulgehäuseträgern in perspektivischer Ansicht;
- Fig. 12: verschiedene Ausführungsformen von standardisierten Modulbauteilen zur Herstellung von Modulgehäuseträgern in perspektivischer Ansicht;
- Fig. 13: einen Modulgehäuseträger hergestellt aus den in Fig. 11 dargestellten standardisierten Modulbauteilen in perspektivischer Ansicht;
- Fig. 14: den Mehrfachspindel-Bearbeitungskopf gemäß Fig. 10 nach Anbringung der Gehäuseverkleidung in perspektivischer Ansicht von unten;
- Fig. 15: eine zweite Ausführungsform eines Mehrfachspindel-Bearbeitungskopfes in perspektivischer Ansicht von unten;
- Fig. 16: eine erfindungsgemässe Mehrfachspindel-Bearbeitungskopf in perspektivischer Ansicht von oben;
- Fig. 17: den Mehrfachspindel-Bearbeitungskopf gemäß Fig. 16 aus einer zweiten perspektivischen Ansicht;
- Fig. 18: einen Werkzeugträger des Mehrfachspindel-Bearbeitungskopf gemäß Fig. 16 in perspektivischer Ansicht;
- Fig. 19: den Werkzeugträger gemäß Fig. 18 im Querschnitt;
- Fig_{.} 20: eine erfindungsgemäβe Spindelaggregat mit daran angeordnetem Werkzeugträger zur Verwendung an dem Mehrfachspindel-Bearbeitungskopf gemäß Fig. 16 in seitlicher Ansicht;
- Fig. 21: das Spindelaggregat mit Werkzeugträger gemäß Fig. 20 im Längsschnitt;
- Fig. 22: eine weitere Ausführungsform eines Spindelaggregats mit zwei Antriebsspindeln und zwei Antriebsmotoren in perspektivischer Ansicht;
- Fig. 23: das Spindelaggregat gemäß Fig. 22 in einer ersten seitlichen Ansicht;
- Fig. 24: das Spindelaggregat gemäß Fig. 22 in einer zweiten seitlichen Ansicht;
- Fig. 25: das Spindelaggregat gemäß Fig. 23 im Längsschnitt entlang der Schnittlinie III-III;
- Fig. 26: das Spindelaggregat gemäß Fig. 23 im Längsschnitt entlang der Schnittlinie IV-IV;
- Fig. 28: einen als pneumatischen Antriebskolben dienenden Antriebsmotor des Spindelaggregats gemäß Fig. 22 in seitlicher Ansicht;
- Fig. 29: den Antriebsmotor gemäß Fig. 28 im Längsschnitt;
- Fig. 30: den Antriebsmotor gemäß Fig. 28 in Ansicht von oben;
- Fig. 31: das Modulgehäuse des Spindelaggregats gemäß Fig. 22 im Längsschnitt;
- Fig. 32: das Modulgehäuse gemäß Fig. 31 im vergrößerten Querschnitt entlang der Schnittlinie V-V.

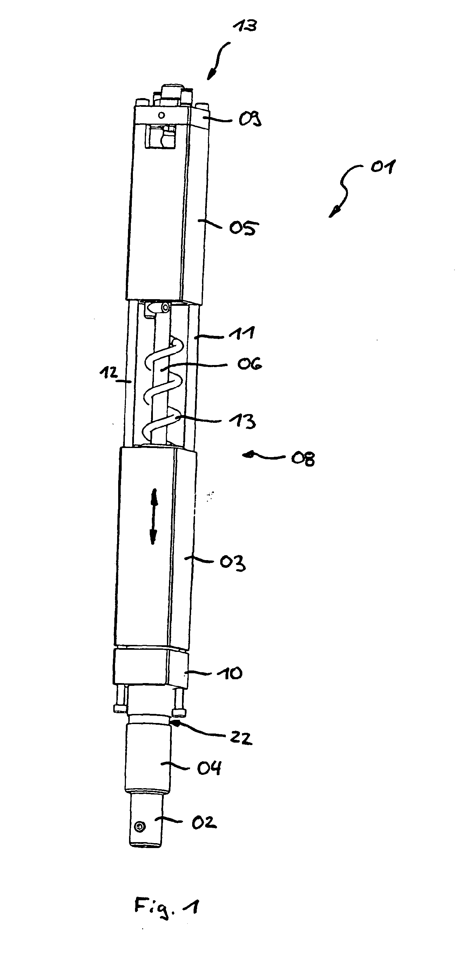

Fig. 1 zeigt eine erste Ausführungsform 01 eines modulartigen Spindelaggregats in perspektivischer Ansicht. Das Spindelaggregat 01 weist eine Antriebsspindel 02 auf, die rotatorisch antreibbar ist und an der ein Werkzeug, beispielsweise ein Bohrer oder Fräser, oder ein Werkzeugträger befestigbar ist. Zum rotatorischen Antrieb der Antriebspindel 02 dient ein elektrischer Antriebsmotor 03, dessen Rotorwelle einstückig mit der Antriebsspindel 02 verbunden ist. Zur rotatorischen Lagerung der Antriebsspindel 02 dient eine Lagerhülse 04, deren oberes Ende verdrehfest mit dem Gehäuse des Antriebsmotors 03 verbunden ist. Zur Axialverstellung des Antriebsmotors 03, der Lagerhülse 04 und der Antriebsspindel 02 dient eine Axialstellvorrichtung 05, die in der Art eines Pneumatikzylinders mit Kolbenstange 06 ausgebildet ist. Die Kolbenstange 06 kann axial aus- und eingefahren werden, wobei die Kolbenstange 06 mit dem Gehäuse des Antriebsmotors 03 verbunden ist und somit den Antriebsmotor 03, die damit verbundene Lagerhülse 04 und die darin geführte Antriebsspindel 02 axial verfährt.

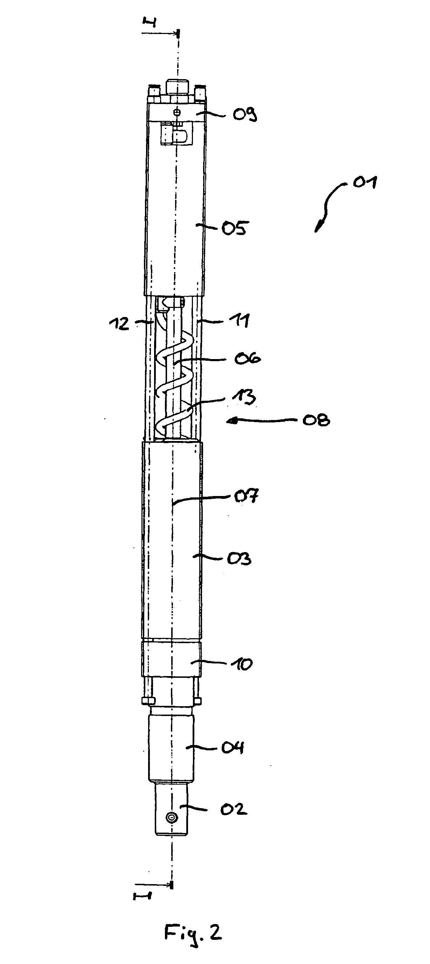

Fig. 2 zeigt das Spindelaggregat 01 mit seiner Aggregatsmittelachse 07 in seitlicher Ansicht. Man erkennt, dass die Mittelachse des Antriebsmotors 03 und die Mittelachse der Antriebsspindel 02 koaxial verlaufen und dadurch die Aggregatsmittelachse 07 definieren. Die Mittelachse der Axialstellvorrichtung 05 verläuft ebenfalls koaxial zu dieser Aggregatsmittelachse 07. Die unterschiedlichen Komponenten des Spindelaggregats 01 sind in einem käfigartigen Modulgehäuse 08 befestigt bzw. gelagert. Das Modulgehäuse 08 besteht im Wesentlichen aus einer oberen Gehäuseplatte 09, einer unteren Gehäuseplatte 10 und zwei Stabachsen 11 und 12, die die Gehäuseplatten 09 und 10 mechanisch miteinander verbinden und in einem festen Abstand zueinander halten. Die Axialstellvorrichtung 05 ist fest mit dem Modulgehäuse 08 verbunden und kann nicht relativ zum Modulgehäuse 08 bewegt werden. An der Oberseite der Gehäuseplatte 09 befinden sich die Anschlüsse 13 zum Anschluss des Spindelaggregats 01 an die pneumatische Druckluftversorgung bzw. an die elektrische bzw. elektronische Steuerung. Das Gehäuse des Antriebsmotors 03 weist in zwei Ecken Längsbohrungen auf, die von den Stabachsen 11 und 12 durchgriffen werden. Somit kann der Antriebsmotor 03 auf den Stabachsen 11 und 12 axial in Richtung der Aggregatsmittelachse verschoben werden und ist zugleich drehfest gelagert, so dass er ein Antriebsmoment auf die Antriebsspindel 02 übertragen kann.

Dem Zweck, den Antriebsmotor 03 mit elektrischer Energie versorgen bzw. Daten zwischen der Steuerung und dem als Servomotor mit Sensorik ausgebildeten Antriebsmotor 03 austauschen zu können, dient ein spiralförmig gerundetes Versorgungskabel 13, das die Kolbenstange 05 mit seinen Windungen umgreift. Aufgrund seiner Elastizität kann das Versorgungskabel 13 die Lageveränderung des Antriebsmotors 03 relativ zum Modulgehäuse 08 längenmäßig ausgleichen und ist zugleich durch die Kolbenstange 06 geführt.

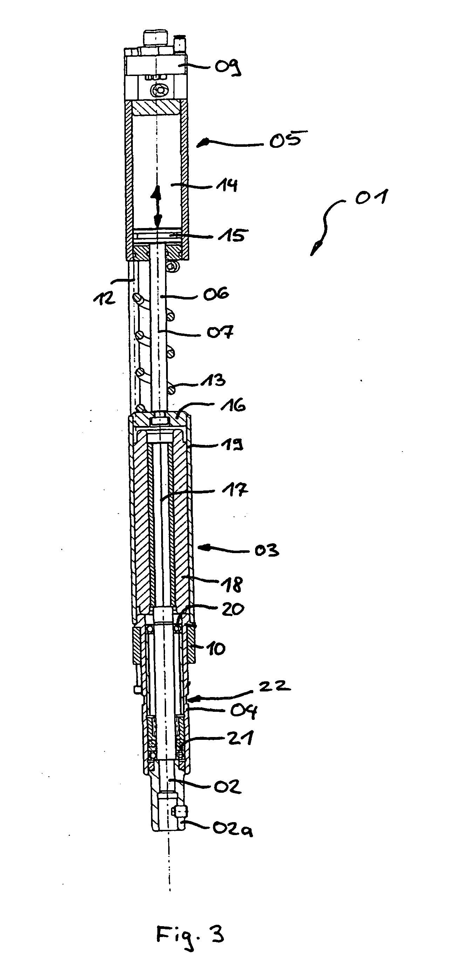

Fig. 3 zeigt das Spindelaggregat 01 im Längsschnitt. Man erkennt die Axialstellvorrichtung 05 mit ihrem pneumatischen Antriebszylinder 14, der mit Druckluft beaufschlagt werden kann, um einen Antriebskolben und die daran befestigte Kolbenstange 06 axial in Richtung der Aggregatsmittelachse 07 auf und ab zu bewegen. Der Antriebsmotor 03 ist mit seinem Gehäusedeckel 16 mechanisch an der Kolbenstange 06 befestigt, so dass die Stellbewegung der Axialstellvorrichtung 05 auf den Motor 03 übertragen werden kann. Die Rotorachse 17 des Antriebsmotors 03 wird mittels eines elektrischen Stators 18 rotatorisch angetrieben. Der Antriebsmotor 03 kann dabei in vorteilhafter Weise in der Art eines Servoantriebs mit geeigneter Sensorik, beispielsweise zur Überwachung der Leistungsaufnahme und der Lage des Rotors 17, ausgebildet sein.

Die Rotorachse 17 ist einstückig mit der Antriebsspindel 02 verbunden, wobei am freien Ende der Antriebsspindel 02 ein Werkzeugbefestigungsmodul 02a zur mechanischen Verbindung eines Werkzeugs, beispielsweise eines Bohrers, mit der Antriebsspindel vorgesehen ist.

Zur drehfreien Lagerung und axialen Fixierung der Antriebsspindel 02 und der Rotorachse 17 relativ zur Lagerhülse 04, die am unteren Ende des Gehäuses 19 des Antriebsmotors 03 befestigt ist, dienen Wälzlager 20 und 21. Die Lagerhülse 04 durchgreift die untere Gehäuseplatte 10 in einer oberflächentolerierten Ausnehmung. Die Oberflächentolerierung des Innendurchmessers der Ausnehmung in der Gehäuseplatte 10 und des Außendurchmessers der Lagerhülse 04 ist dabei in der Art eines Gleitlagers gewählt, so dass ein Schiebelagersitz realisiert wird. In diesem Schiebelagersitz kann die Lagerhülse 04 durch die Gehäuseplatte 10 axial verschoben werden, wobei die Aggregatsmittelachse 07 radial zentriert wird.

In der Mitte der Lagerhülse 04 ist außenseitig eine Fixiernut 22 eingearbeitet, die im axial ausgefahrenen Zustand der Lagerhülse 04 über das Modulgehäuse 08 hinausragt. Diese Fixiernut dient der axialen Fixierung der axial verstellbaren Teile des Spindelaggregats 01.

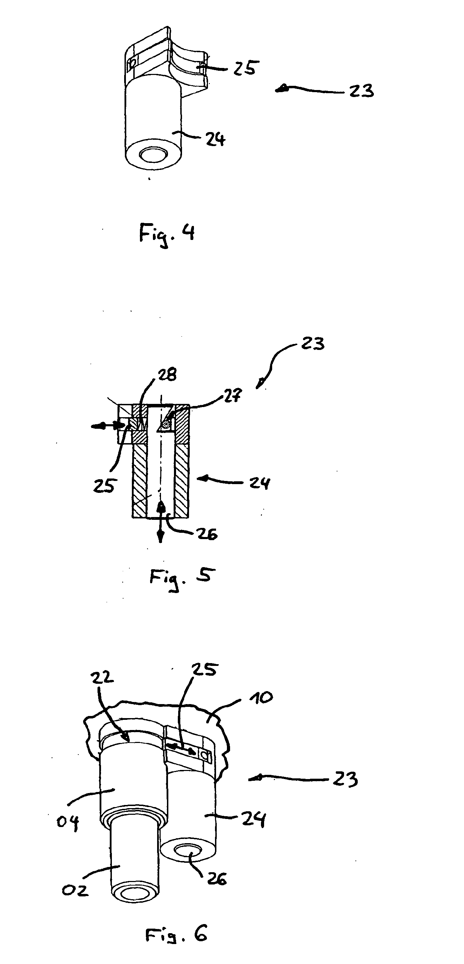

In Fig. 4 bis Fig. 6 ist eine Verriegelungseinrichtung 23 dargestellt, die bei der axialen Fixierung des Spindelaggregats 01 mit der Fixiernut 22 zusammenwirkt. An der Verriegelungseinrichtung 23 kann mittels einer Magnetstelleinrichtung 24 ein Riegel 25 ein- und ausgefahren werden, um auf diese Weise in die Fixiernut 22 formschlüssig einzugreifen bzw. außer Eingriff zu kommen. Wird an die Magnetstelleinrichtung 24 Spannung angelegt, wird ein Antriebsbolzen 26 axial verstellt und drückt mit einer Keilnut 27 den Riegel 25 nach hinten, so dass er außer Eingriff der Fixiernut 22 kommt. Im spannungslosen Zustand wird der Riegel 25 dann durch die Spannkraft eines Federelements 28 nach vorne gedrückt und kann in die Fixiernut 22 eingreifen. Aufgrund seiner kompakten Bauweise kann die Verriegelungseinrichtung 23 zwischen sehr eng benachbarten Spindelaggregaten 01 angeordnet werden. Dies wird insbesondere auch dadurch ermöglicht, dass die Verriegelungseinrichtung 23 an der die Außenseite des Modulgehäuses 08 bildenden Unterseite der Gehäuseplatte 10 angeordnet wird.

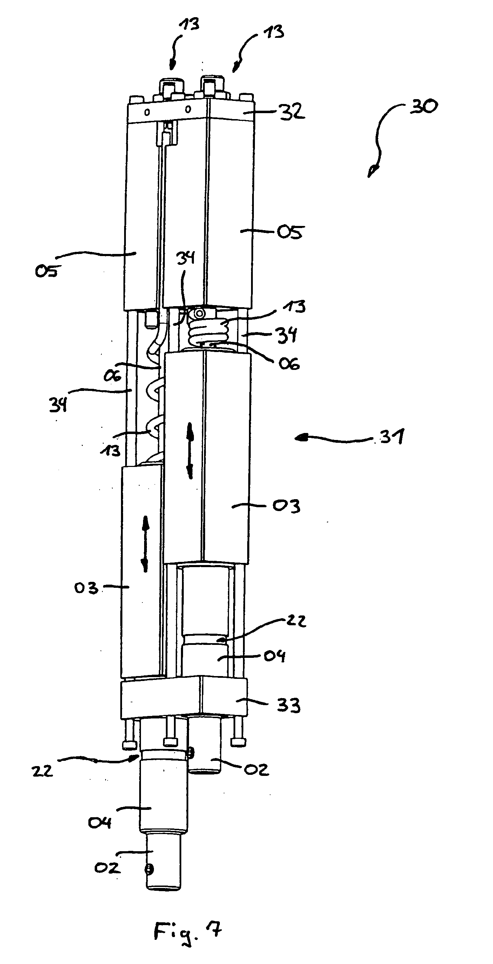

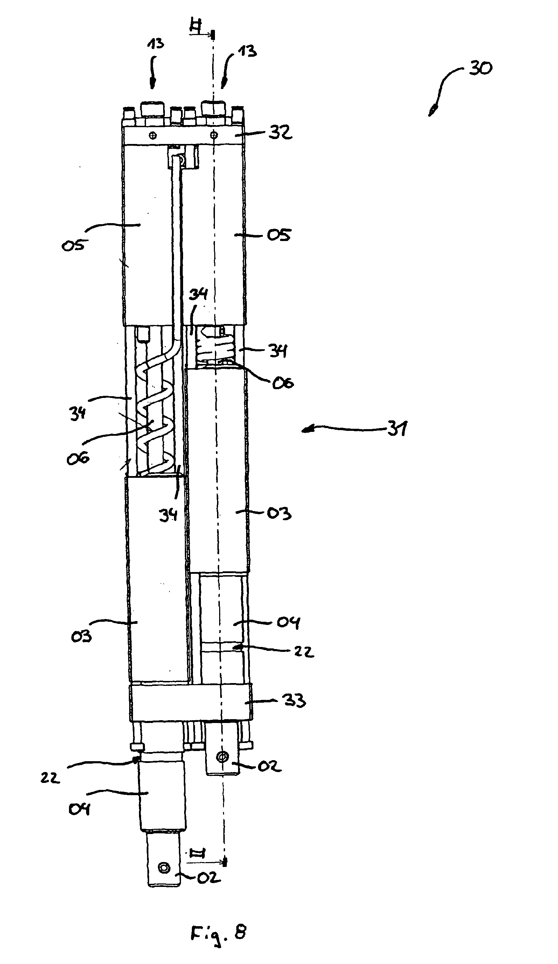

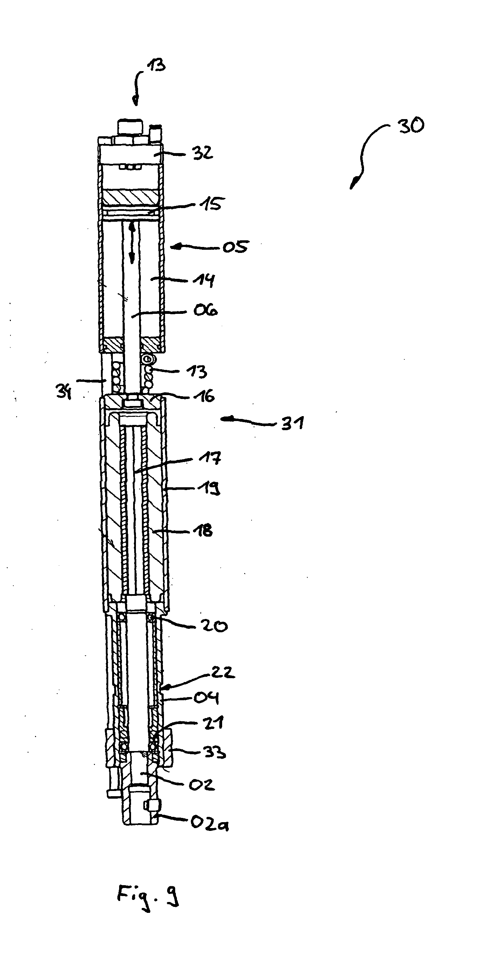

Fig. 7 bis Fig. 9 zeigen eine zweite Ausführungsform 30 eines modulartigen Spindelaggregats. Das Spindelaggregat 30 unterscheidet sich vom Spindelaggregat 01 dadurch, dass zwei Antriebsspindeln 02 vorgesehen sind, die immer paarweise verbaut werden. Selbstverständlich sind auch Spindelaggregate mit anderer Anzahl von Antriebsspindeln, nämlich beispielsweise mit vier Antriebsspindeln, denkbar.

Jeder der Antriebsspindeln 02 ist wiederum in der Lagerhülse 04 drehfrei und axial spielfrei gelagert und kann mit einem eigenen Antriebsmotor 03 rotatorisch angetrieben und mit einer Axialstellvorrichtung 05 axial verstellt werden. Das Modulgehäuse 31 des Spindelaggregats 30 wird von einer oberen Gehäuseplatte 32, einer unteren Gehäuseplatte 33 und vier jeweils paarweise angeordneten Stabachsen 34 gebildet. Die axial verschiebliche Lagerung der Antriebsmotoren 03 an den Stabachsen 34 entspricht dabei dem Prinzip des Spindelaggregats 01. In der Gehäuseplatte 33 sind entsprechend der Anzahl an Lagerhülsen 04 zwei Ausnehmungen vorgesehen, die jeweils einen Schiebelagersitz für die Lagerhülsen 04 bilden. Ansonsten entspricht der Aufbau des Spindelaggregats 30 prinzipiell dem Aufbau des Spindelaggregats 01.

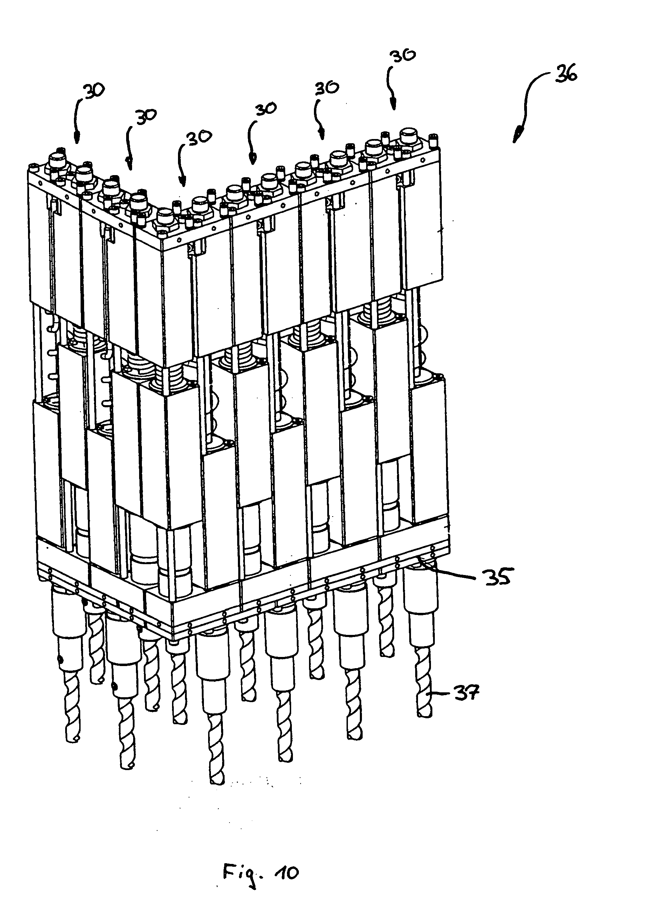

Um die Spindelaggregate 01 bzw. 30 in exakter Lage relativ zueinander positionieren zu können, kann ein Modulgehäuseträger Verwendung finden. Ein solcher Modulgehäuseträger 35 zur Herstellung eines Mehrfachspindel-Bearbeitungskopfes 36 ist in Fig. 10 beispielhaft dargestellt. Sechs Spindelaggregate 30 sind mit jeweils zwei paarweise vorgesehenen Antriebsspindeln 02 auf dem Modulgehäuseträger 35 befestigt. Die Befestigung der Spindelaggregate 30 erfolgt dabei jeweils unabhängig voneinander direkt am Modulgehäuseträger 35, so dass sich Positionierungsfehler nicht addieren können. Der so hergestellte Mehrfachspindel-Bearbeitungskopf 36 kann insgesamt mit zwölf Werkzeugen, nämlich zwölf Bohrern 37, ausgestattet werden, um ein L-förmiges Bohrbild herzustellen. Die Antriebsspindeln 02 können dabei unabhängig voneinander rotatorisch angetrieben und unabhängig voneinander axial ausgefahren werden, außerdem ist eine Prozessüberwachung der Bearbeitungsvorgänge an jedem einzelnen Bohrer 37 durch entsprechende Sensorik möglich.

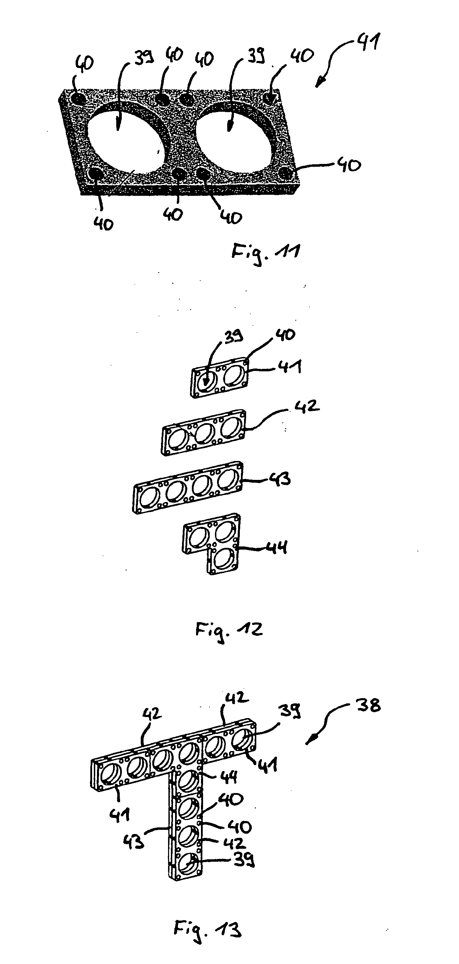

Die Herstellung eines Modulgehäuseträgers soll anhand der Zeichnungen Fig. 11 bis Fig. 13 erläutert werden. Der in Fig. 12 in Perspektive dargestellte Modulgehäuseträger 38 ist T-förmig aufgebaut und weist insgesamt 10 Ausnehmungen 39 auf, die als Schiebelagersitz für die Lagerhülsen 04 dienen und eine exakte Ausrichtung der Antriebsspindeln 02 am Modulgehäuseträger 38 ermöglichen. Bei der Montage der Spindelaggregate 01 bzw. 30 am Modulgehäuseträger 38 werden die Lagerhülsen 04 durch die Ausnehmungen 39 durchgesteckt und auf diese Weise ausgerichtet. Anschließend erfolgt die Fixierung der Gehäuseplatten 10 bzw. 33 durch Einschrauben von Befestigungsschrauben durch Ausnehmungen 40. Die Befestigungsschrauben durch die Ausnehmungen 40 können dabei zugleich auch zur Fixierung der Stabachsen 34 bzw. 11 und 12 dienen.

Durch die Geometrie des Modulgehäuseträgers 38 wird die Bohrbildgeometrie des herzustellenden Mehrfachspindel-Bearbeitungskopfes bestimmt. Um mit standardisiert vorgefertigten Bauteilen eine Vielzahl von Geometrien von Modulgehäuseträgern herstellen zu können, werden standardisierte Modulbauteile vorgeschlagen.

In Fig. 11 und Fig. 12 sind entsprechende Modulbauteile, die in der Art von Plattenelementen 41, 42, 43 und 44 ausgebildet sind, perspektivisch dargestellt. Die Plattenelemente 41 bis 43 weisen jeweils unterschiedlichen Längen mit einer unterschiedlichen Anzahl von Ausnehmungen 39 auf. Das Plattenelement 44 ist als Eckverbindung vorgesehen.

Zur Herstellung des Modulgehäuseträgers 38 werden zwei Plattenelemente 42 und ein Plattenelement 43 T-förmig als erste Lage auf einer Schablonenvorrichtung ausgelegt. Anschließend wird eine zweite Lage aus zwei Plattenelementen 41, einem Eckplattenelement 44 und ein Plattenelement 42 in gleicher Geometrie aufgelegt. Die Endstöße der Plattenelemente in den beiden Lagen überlappen dabei. Die verwendete Schablonenvorrichtung weist bevorzugt maßtolerierte Ausrichtebolzen auf, auf die die Plattenelemente mit den Ausnehmungen 39 aufgesteckt werden, um dadurch eine maßhaltige Ausrichtung der Plattenelemente relativ zueinander zu realisieren.

Die beiden Lagen werden dann mechanisch miteinander verbunden, beispielsweise miteinander verklebt. Somit kann aus den standardisierten Modulbauteilen 41 bis 44 eine beliebige Vielzahl von Modulgehäuseträgern mit jeweils unterschiedlicher Geometrie bzw. Abmessung hergestellt werden.

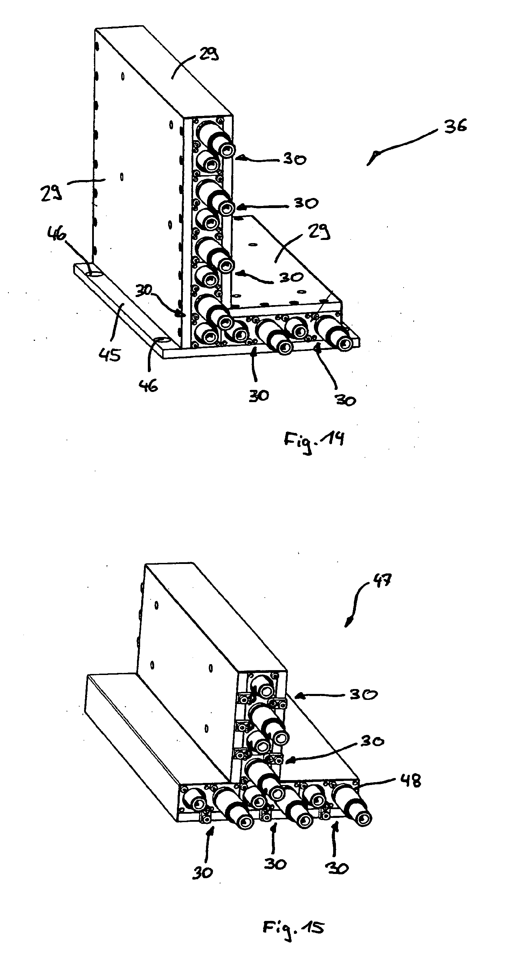

Fig. 14 zeigt den Mehrfachspindel-Bearbeitungskopf 36 nach der Anbringung von Gehäuseverkleidungen 29. An einer Seite ist außerdem eine Befestigungsplatte 45 mit Befestigungsbohrungen 46 vorgesehen, die dem Anschluss des Mehrfachspindel-Bearbeitungskopfes an einer Werkzeugmaschine dienen.

Fig. 15 zeigt eine alternative Geometrie eines Mehrfachspindel-Bearbeitungskopfes 47, zur Realisierung eines T-förmigen Bohrbilds. Der Mehrfachspindel-Bearbeitungskopf 47 ist aus fünf Spindelaggregaten 30 und einem T-förmigen Modulgehäuseträger 48 aufgebaut.

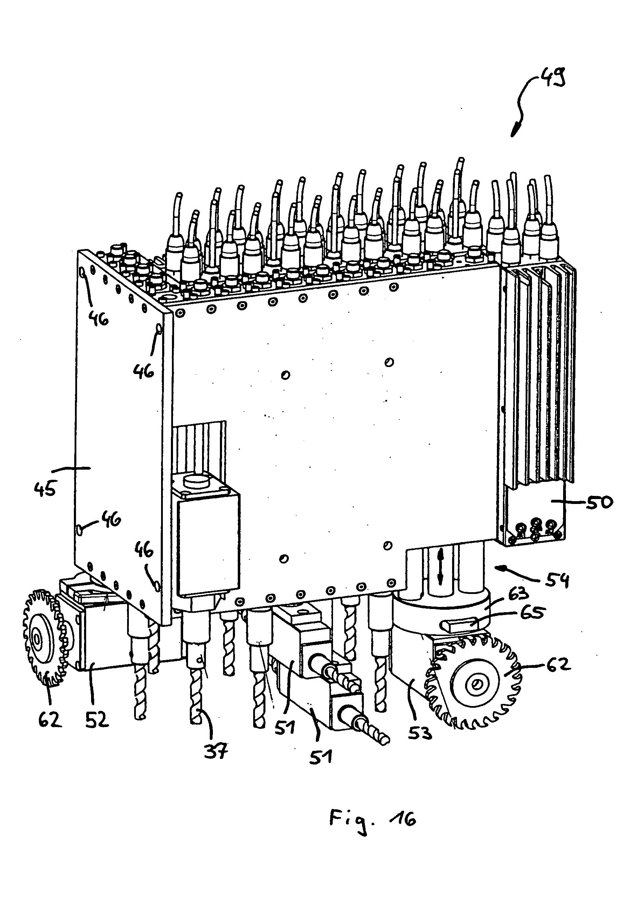

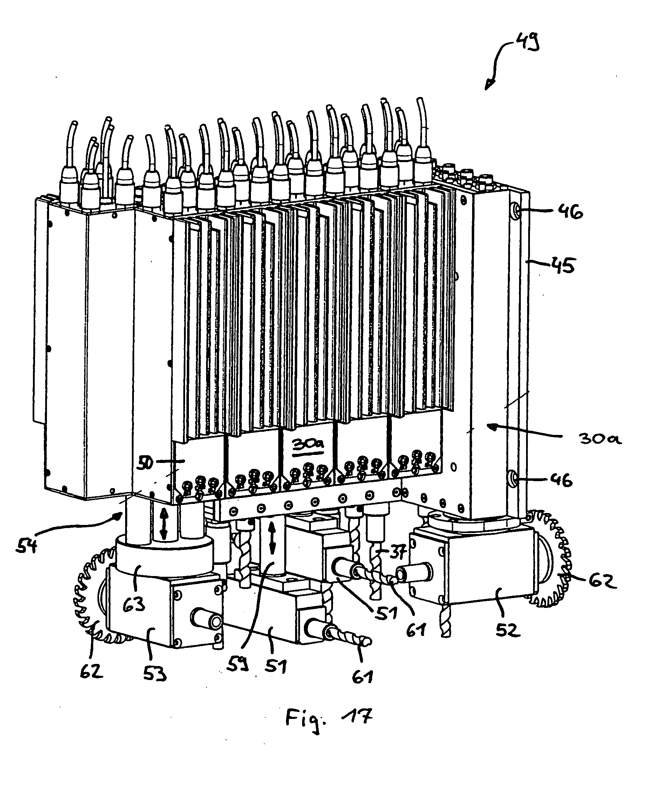

Fig. 16 und Fig. 17 zeigen den erfindungsgemässen Mehrfachspindel-Bearbeitungskopf Man erkennt die Befestigung der elektronischen Steuerungseinheiten 50, die jeweils einem Antriebsmotor zugeordnet sind, an der Verkleidung des Mehrfachspindel-Bearbeitungskopfes 49. Am Mehrfachspindel-Bearbeitungskopf 49 sind mehrere Spindelaggregate 01 und 30 vorgesehen, an deren Antriebsspindeln 02 jeweils einfache Vertikalbohrer 02 befestigt sind.

Darüber hinaus sind vier Spindelaggregate vorhanden, an deren Antriebsspindeln Werkzeugträger 51, 52 bzw. 53 befestigt sind. Die Werkzeugträger 51, 52 und 53 sind jeweils mit eigenem Antriebsmotor ausgestattet und vom rotatorischen Antrieb in den Spindelaggregaten 01 bzw. 30 unabhängig. Die den Werkzeugträgern 51, 52 bzw. 53 zugeordneten Spindelaggregate 30a dienen lediglich zur Axialverstellung der Werkzeugträger 51, 52 und 53 und zum Anschluss der Werkzeugträger 51, 52 bzw. 53 an die jeweils zugeordneten elektronischen Steuerungseinheiten 50 und weisen deshalb keinen eigenen Antriebsmotor auf

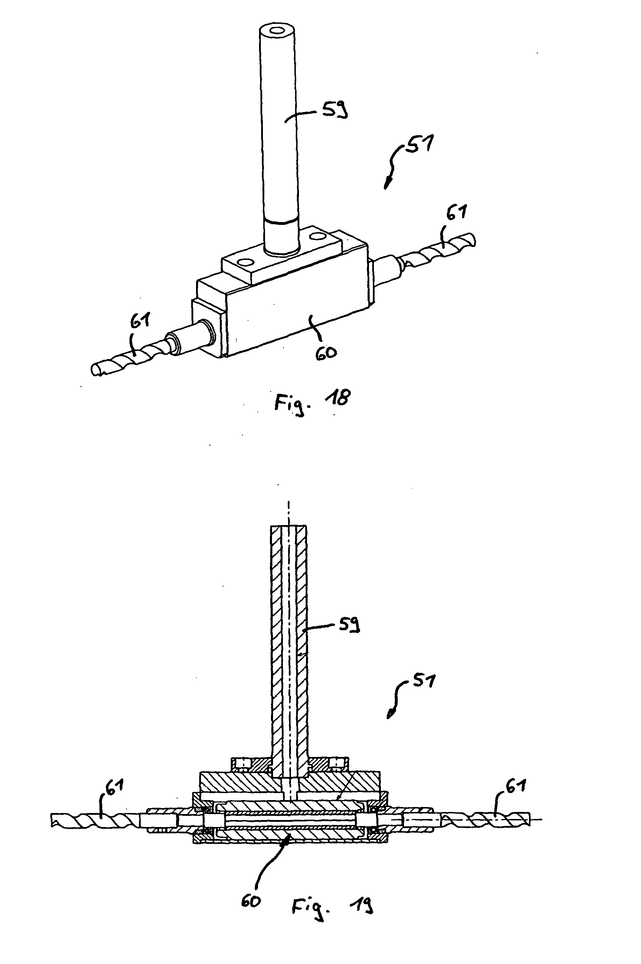

Fig. 18 und Fig. 19 zeigen einen Werkzeugträger 51 in perspektivischer Ansicht und im Querschnitt. Der Werkzeugträger 51 ist drehfest mit einer Verlängerungshülse 59 verbunden, die ihrerseits mit ihrem oberen Ende drehfest an der Lagerhülse 04 eines Spindelaggregats 01 bzw. 30 fixierbar ist. Im Werkzeugträger 51 ist ein Antriebsmotor 60, der in der Art eines regelbaren Servomotors ausgebildet ist, vorgesehen, der zwei Horizontalbohrer 61 antreibt. Die Antriebsbewegung des am Werkzeugträger 51 vorgesehenen Spindelaggregats 01 bzw. 30 wird nicht auf die Horizontalbohrer 61 übertragen. Mit den Horizontalbohrern 61 können Horizontalbohrungen senkrecht zur Bohrrichtung der Vertikalbohrer 37 ausgeführt werden.

Der Werkzeugträger 52 (siehe Fig. 17) dient zum Antrieb eines Sägeblatts 62 und kann von Hand um die Aggregatsmittelachse verschwenkt werden. Der Werkzeugträger 53 ist ebenfalls mit einem Sägeblatt 62 ausgestattet und kann durch Antrieb einer Antriebsachse verschwenkt werden.

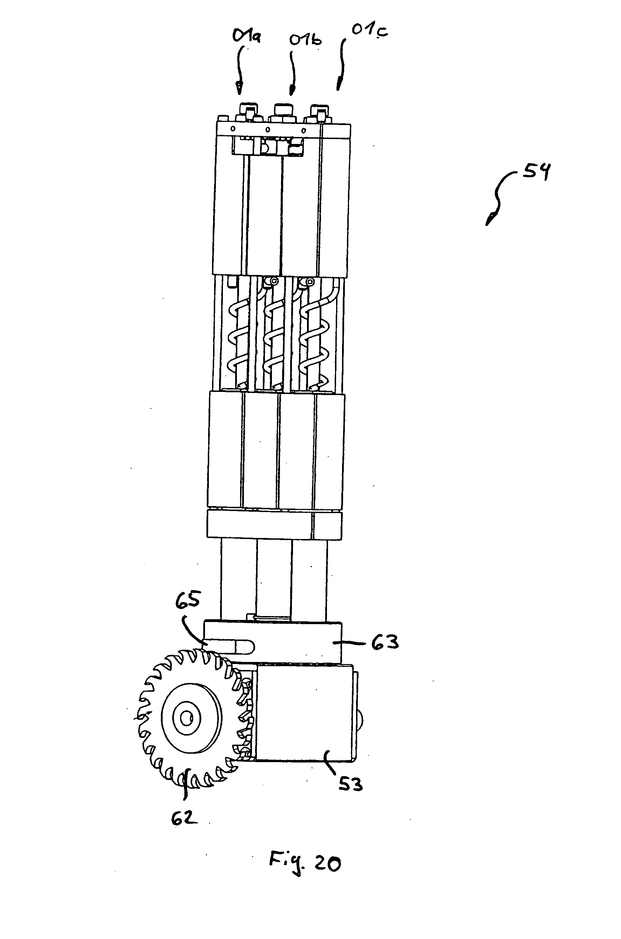

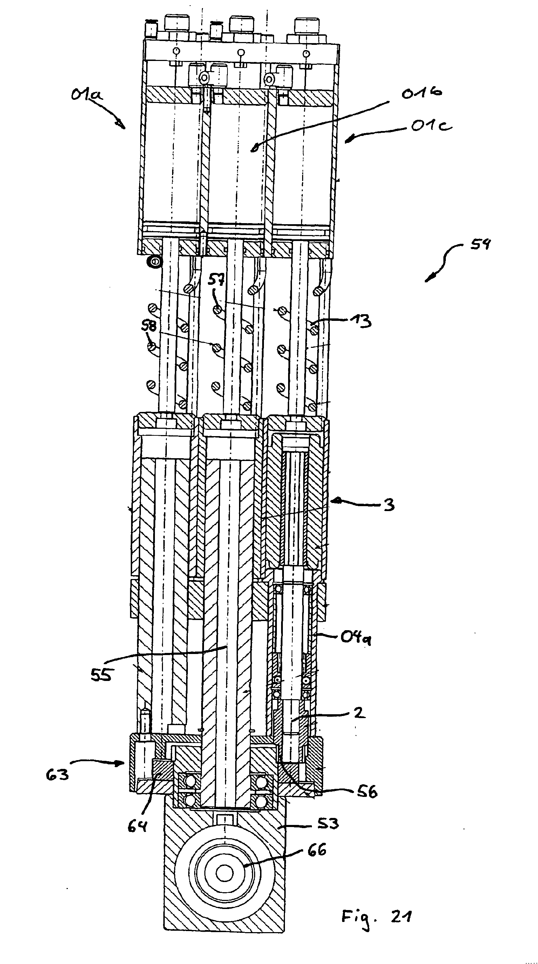

Fig. 20 und Fig. 21 zeigen das Spindelaggregat 54, an dem der Werkzeugträger 53 gehaltert ist. Der Aufbau des Spindelaggregats 54 ergibt sich im Wesentlichen aus der Kombination der Grundbestandteile von drei modifizierten Spindelaggregaten 01a, 01b und 01c. Die Spindelaggregate 01a, 01b und 01c erhalten konstruktive Modifikationen zur Anpassung des Spindelaggregats 54 an den Werkzeugträger 53. Insbesondere weisen die beiden Spindelaggregate 01a und 01b keine eigenen Antriebsmotoren 03 auf. Diese Bildung des Spindelaggregats 54, das den Werkzeugträger 53 am Bearbeitungskopf lagert, ermöglicht die problemlose Integration eines solchen Werkzeugträgers 53 in eine am Bearbeitungskopf vorgesehene Reihe von Spindelaggregaten 01 bzw. 30.

Es sind drei Axialstellvorrichtungen 05 vorhanden, um den Werkzeugträger 53 axial zu positionieren. Dabei ist der Werkzeugträger 53 um 360 Grad um die Aggregatsmittelachse 55 verschwenkbar. Als Schwenkantrieb zum Verschwenken des Werkzeugträgers 53 dient ein Antriebsmotor 03, dessen Antriebsspindel 02 über eine Verzahnung 56 mit einem durch eine Klemmeinrichtung 64 arretierbaren Schwenkgetriebe 63, an dem der Werkzeugträger 53 befestigt ist, in Eingriff steht. Die Klemmeinrichtung ist als konischer Reibflansch ausgebildet, der von dem nicht mitdrehenden Kolben betätigt wird. Weiter ist im Schwenkgetriebe 63 ein Positionssensor 65 vorgesehen, um den Schwenkwinkel des Werkzeugträgers 53 zu überwachen.

Die elektrische Anschluss des Antriebsmotors 66 im Werkzeugträger 53 und des Positionssensors 65 im Schwenkgetriebe 63 erfolgt über spiralförmig gewundene Verbindungskabel 57 und 58, die länger sind als das Anschlusskabel 13, mit dem der Antriebsmotor 03 im Spindelaggregat 54 angeschlossen ist.

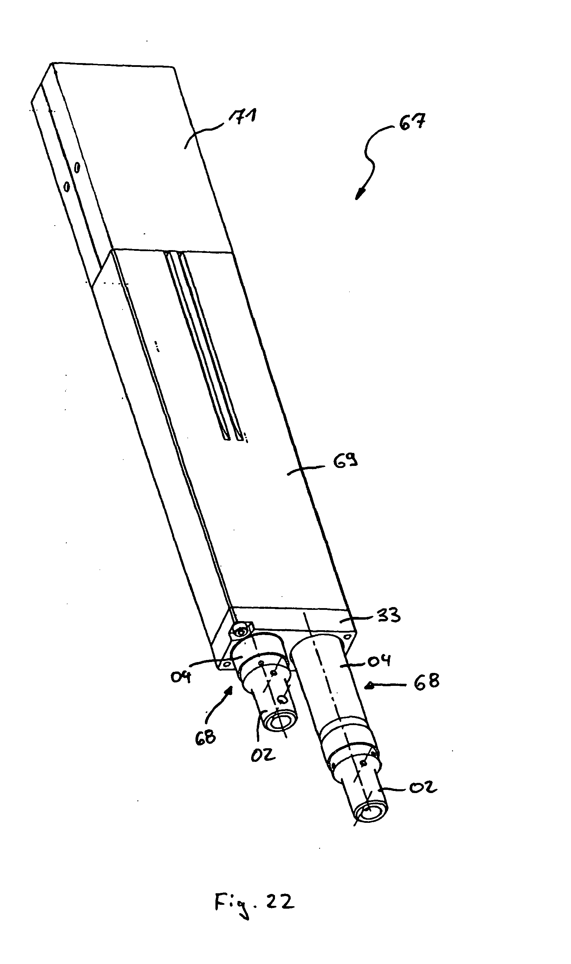

Fig. 22 zeigt eine weitere Ausführungsform 67 eines modulartigen Spindelaggregats in perspektivischer Ansicht. Das Spindelaggregat 67 weist wiederum zwei Antriebsspindeln 02 auf, die jeweils paarweise verbaut sind. Jede der beiden Antriebsspindeln 02 kann mit einem eigenen elektrischen Antriebsmotor 68 rotatorisch angetrieben werden. Die Antriebsmotoren 68 können ihrerseits in dem Modulgehäuse 69 durch pneumatischen Antrieb axial verstellt und dadurch nach vorne ausgefahren beziehungsweise nach hinten zurückgezogen werden. Das Gehäuse 70 der Antriebsmotoren 68 dient dabei jeweils als pneumatischer Antriebskolben, die einen pneumatischen Stellzylinder im Modulgehäuse 69 abdichten. An der den Spindeln 02 abgewandten Seite des Modulsgehäuses 69 ist eine pneumatische Steuerungseinheit 71 befestigt, in der die pneumatischen Stellventile zur Axialverstellung der Antriebsmotoren 68 eingebaut sind. Außerdem enthält die Steuerungseinheit 71 auch elektrische Anschlüsse zur Energieversorgung der Antriebsmotoren 68. Der Querschnitt der Steuerungseinheit 71 entspricht dabei exakt dem prismatischen Querschnitt des Modulgehäuses 69, damit mehrere Spindelaggregate 67 möglichst eng gepackt nebeneinander an einem Modulgehäuseträger befestigt werden können. Die Lagerhülsen 04 der Spindeln 02 sind wiederum axial verschieblich in einer Gehäuseplatte 33 im Wesentlichen radial spielfrei gelagert, so dass ein Schiebelagersitz für die Lagerhülsen 04 gebildet wird.

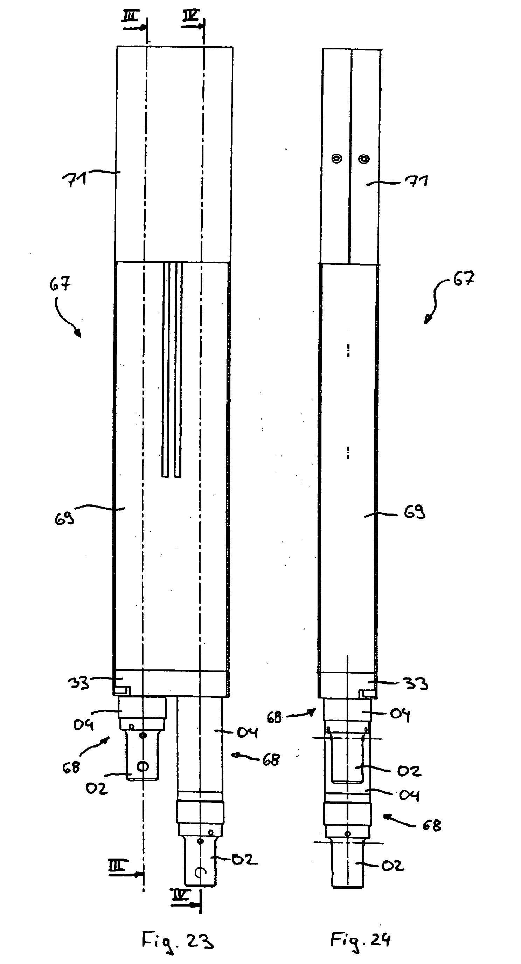

Fig. 23 und Fig. 24 zeigen das Spindelaggregat 67 in den beiden seitlichen Ansichten, wobei in den dargestellten Ansichten die eine Antriebsspindel 02 eingefahren und die andere Antriebsspindel 02 ausgefahren ist.

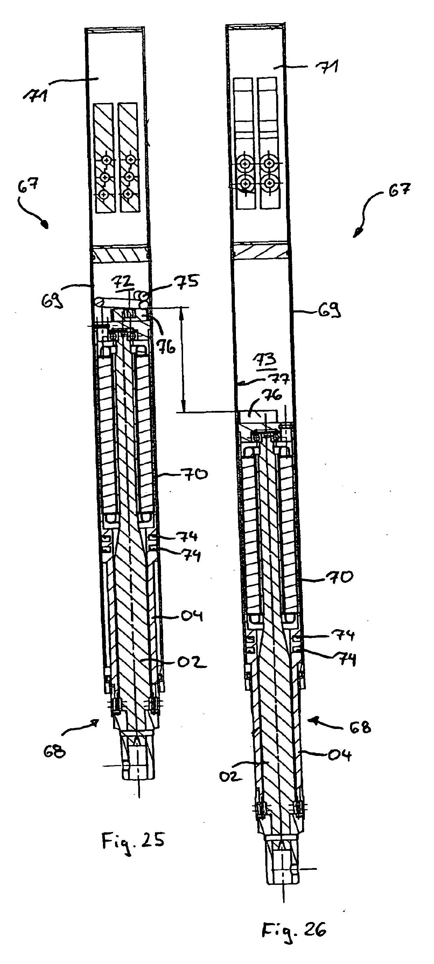

Fig. 25 zeigt das Spindelaggregat 67 entlang der Schnittlinie III-III durch die in das Modulgehäuse 69 eingefahrene Antriebsspindel. Das Modulgehäuse 69 enthält zwei pneumatische Antriebszylinder 72 und 73, in denen durch Ansteuerung von Pneumatik-Ventilen in der Steuerungseinheit 71 ein pneumatischer Über- beziehungsweise Unterdruck aufgebaut werden kann. Je nach Druckverhältnissen in den pneumatischen Antriebszylindern 72 und 73 werden die als pneumatische Antriebskolben dienenden Motorengehäuse 70 der Antriebsmotoren 68 axial ausgefahren beziehungsweise axial eingefahren. Zur Abdichtung des als Antriebskolben dienenden Motorengehäuses 70 gegenüber dem pneumatischen Antriebszylinder 72 beziehungsweise 73 sind jeweils am Außenumfang der Motorengehäuse 70 jeweils zwei Dichtringe 74 befestigt.

Zur Versorgung des Antriebsmotors 68 mit elektrischer Energie verläuft in den pneumatischen Antriebszylindern 72 und 73 jeweils eine spiralförmig gewundene Leitung 75, die lediglich in Fig. 25 angedeutet ist. Die Leitung 75 erstreckt sich dabei von einem Anschluss am hinteren Ende des Antriebsmotors 68 zu den Anschlüssen in der Steuerungseinheit 71.

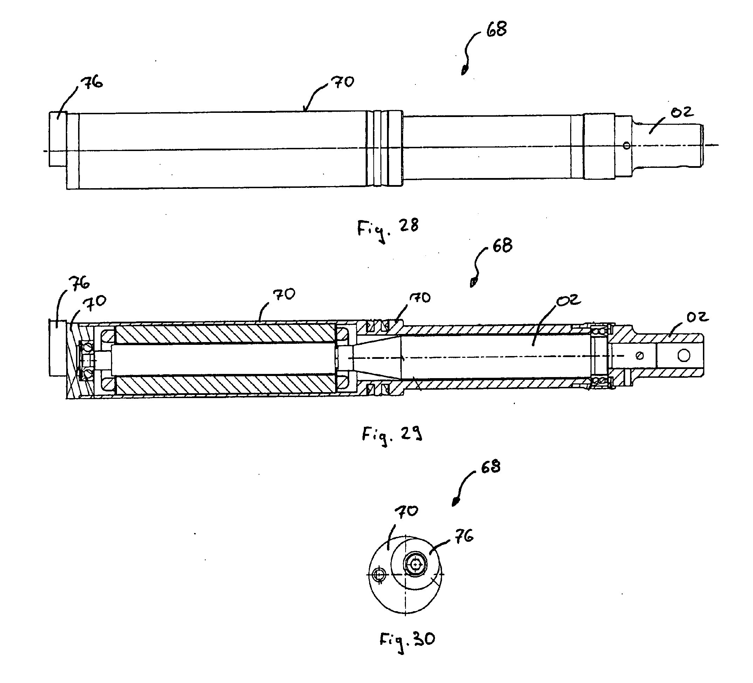

Zur Drehmomentabstützung des Antriebsmotors 68 gegenüber dem Modulgehäuse 69 dient ein am hinteren Ende des Antriebsmotors 68 befestigtes Stützelement 76, das radial ein Stück weit über den zylindrischen Umfang des Gehäuses 70 des Antriebsmotors 68 hinausgreift und formschlüssig in eine Stütznut 77 in der Kolbenlauffläche 78 der beiden pneumatischen Stellzylinder 72 und 73 eingreift. Der geringfügige radiale Überstand des Stützelements 76 gegenüber dem Gehäuse 70 des Antriebsmotors 68 ist insbesondere aus Fig. 30 ersichtlich. Als Stützelement dient dabei eine kreisförmige Platte, die von hinten auf das Gehäuse 70 des Antriebsmotors 68 aufgeschraubt wird.

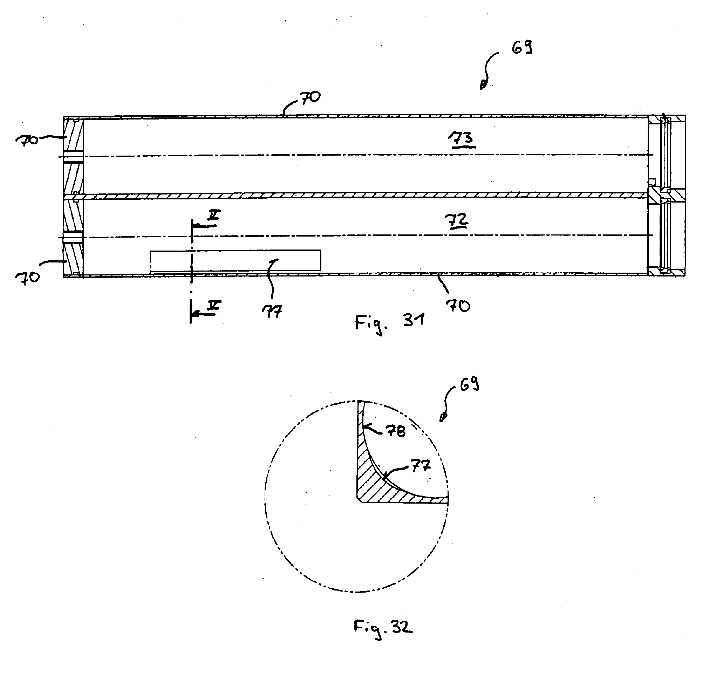

Fig. 31 und Fig. 32 zeigen die Stütznut 77, die sich jeweils in der Kolbenlauffläche 78 der beiden Stellzylinder 72 und 73 in Richtung der Längsachse der Spindelaggregate erstreckt. In Fig. 31 ist dabei lediglich die Stütznut 77 des Stellzylinders 72 dargestellt. Die Länge der Stütznuten 77 ist dabei ein Stück weit größer als der maximale Hub der beiden Antriebsmotoren 68 gegenüber dem Modulgehäuse 69 (siehe Fig. 25 relativ zur Fig. 26). Aufgrund der Anordnung der Stütznut 77 in der oberen Hälfte der Stellzylinder 72 und 73 ist außerdem gewährleistet, dass die Dichtringe 74 jeweils unterhalb der Stütznuten 77 liegen und somit jederzeit eine ausreichende Abdichtung der Stellzylinder 72 und 73 gewährleistet ist.

### Bezugszeichenliste

- 01: Modulartiges Spindelaggregat
- 02: Antriebsspindel
- 03: Antriebsmotor
- 04: Lagerhülse
- 05: Axialstellvorrichtung
- 06: Kolbenstange
- 07: Aggregatsmittelachse
- 08: Modulgehäuse
- 09: Obere Gehäuseplatte
- 10: Untere Gehäuseplatte
- 11: Stabachse
- 12: Stabachse
- 13: Anschluß
- 14: Pneumatischer Antriebszylinder
- 15: Pneumatischer Antriebskolben
- 16: Gehäusedeckel (Motorengehäuse)
- 17: Rotorachse
- 18: Stator
- 19: Motorengehäuse
- 20: Wälzlager
- 21: Wälzlager
- 22: Fixiernut
- 23: Verriegelungseinrichtung
- 24: Magnetstelleinrichtung
- 25: Riegel
- 26: Antriebsbolzen
- 27: Keilnut
- 28: Federelement
- 29: Gehäuseverkleidung
- 30: Modulartiges Spindelaggregat
- 31: Modulgehäuse
- 32: Obere Gehäuseplatte
- 33: Untere Gehäuseplatte
- 34: Stabachse
- 35: Modulgehäuseträger
- 36: Mehrfachspindel-Bearbeitungskopf
- 37: Bohrer
- 38: Modulgehäuseträger
- 39: Ausnehmung
- 40: Ausnehmung
- 41: Plattenelement
- 42: Plattenelement
- 43: Plattenelement
- 44: Plattenelement
- 45: Befestigungsplatte
- 46: Befestigungsbohrung
- 47: Mehrfachspindel-Bearbeitungskopf
- 48: Modulgehäuseträger
- 49: Mehrfachspindel-Bearbeitungskopf
- 50: Elektrische Steuerungseinheit
- 51: Werkzeugträger mit Antriebsmotor
- 52: Werkzeugträger mit Antriebsmotor
- 53: Werkzeugträger mit Antriebsmotor
- 54: Modulartiges Spindelaggregat
- 55: Aggregatsmittelachse
- 56: Verzahnung
- 57: Verbindungskabel
- 58: Verbindungskabel
- 59: Verlängerungshülse
- 60: Antriebsmotor
- 61: Horizontalbohrer
- 62: Sägeblatt
- 63: Schwenkgetriebe
- 64: Klemmeinrichtung
- 65: Positionssensor
- 66: Antriebsmotor
- 67: Spindelaggregat
- 68: Antriebsmotor
- 69: Modulgehäuse
- 70: Motorengehäuse
- 71: Steuerungseinheit
- 72: Pneumatischer Antriebszylinder
- 73: Pneumatischer Antriebszylinder
- 74: Dichtring
- 75: Elektrische Anschlussleitung
- 76: Stützelement
- 77: Stütznut
- 78: Kolbenlauffläche

## Patentansprüche

1. Modulartiges Spindelaggregat zur Bildung eines Mehrfachspindel-Bearbeitungskopfes (36, 47, 49) für eine Werkzeugmaschine, wobei das Spindelaggregat (01, 30, 54) zumindest eine Antriebsspindel (02) umfasst, an der ein Werkzeug (37) oder Werkzeugträger (51, 52) anbringbar ist, und wobei das Spindelaggregat (01, 30, 54) ein Modulgehäuse (08, 31) umfasst, in dem die Antriebsspindel (02) frei drehbar und axial verschiebbar gelagert ist, und wobei das Modulgehäuse (08, 31) zusammen mit weiteren Modulgehäusen (08, 31) am Bearbeitungskopf (36, 47, 49) befestigbar ist, und wobei das Spindelaggregat (01, 30, 54) zumindest einen Antriebsmotor (03) umfasst, mit dem eine zugeordnete Antriebsspindel (02) rotatorisch antreibbar ist, und wobei die Mittelachse des Antriebsmotors (03) und die Mittelachse der Antriebsspindel (02) koaxial verlaufen und eine Aggregatsmittelachse (07) definieren, und wobei das Spindelaggregat (01, 30, 54) zumindest eine Axialstellvorrichtung (05) umfasst, mit der eine zugeordnete Antriebsspindel (02) in Richtung der Aggregatsmittelachse (07) axial antreibbar ist, und wobei die Mittelachse zumindest einer Axialstellvorrichtung (05) und die Aggregatsmittelachse (07) koaxial verlaufen, wobei der Antriebsmotor (03) axial verschiebbar im Modulgehäuse (08, 31) gelagert ist und durch Antrieb der Axialstellvorrichtung (05) zusammen mit der Antriebsspindel (02) längs der Aggregatsmittelachse (07) axial im Modulgehäuse (08, 31) verschoben werden kann
**dadurch gekennzeichnet,**
**dass** an zumindest einem Spindelaggregat (30a, 54) des Bearbeitungskopfes (49) ein Werkzeugträger (51, 52, 53, 54) angeordnet ist, wobei der Werkzeugträger (51, 52, 53, 54) mit der Axialstellvorrichtung (05) des Spindelaggregats (30a, 54) axial verstellbar ist, und wobei der Werkzeugträger (51, 52, 53, 54) einen eigenen Antriebsmotor (60, 66) umfasst, mit dem ein Werkzeug (61, 62) rotatorisch antreibbar ist.

2. Spindelaggregat nach Anspruch 1,
**dadurch gekennzeichnet,**
**dass** das Modulgehäuse (08, 31) zwei Gehäuseplatten (09, 10, 32, 33) an den beiden Axialenden des Spindelaggregats (01, 30) und zumindest zwei Stabachsen (11, 12, 34) umfasst, wobei die Stabachsen (11, 12, 34) sich insbesondere parallel zur Aggregatsmittelachse (07) erstrecken und die beiden Gehäuseplatten mit festem Abstand mechanisch miteinander verbinden.

3. Spindelaggregat nach Anspruch 1 oder 2,
**dadurch gekennzeichnet,**
**dass** zur drehfesten und axial verschiebbaren Lagerung des Antriebsmotors (03) zumindest zwei Ausnehmungen im Gehäuse des Antriebsmotors (03) vorgesehen sind, durch die sich die Stabachsen (11, 12, 34) des Modulgehäuses (08, 31) unter Bildung einer Axiallagerung erstrecken.

4. Spindelaggregat nach einem der Ansprüche 1 bis 3,
**dadurch gekennzeichnet,**
**dass** das Spindelaggregat (30) mehrere Antriebsspindeln (02), insbesondere zwei oder vier Antriebsspindeln (02), mit jeweils einem zugeordneten Antriebsmotor (03) und mit jeweils einer zugeordneten Axialstellvorrichtung (05) umfasst.

5. Spindelaggregat nach einem der Ansprüche 1 bis 4,
**dadurch gekennzeichnet,**
**dass** am Antriebsmotor (03) eine Lagerhülse (04) befestigt ist, in der die Antriebsspindel (02) frei drehbar und/oder axial feststehend gelagert ist, wobei insbesondere die Rotorachse (17) des Antriebsmotors (03) in der Lagerhülse (04) frei drehbar und/oder axial feststehend gelagert ist.

6. Spindelaggregat nach Anspruch 5,
**dadurch gekennzeichnet,**
**dass** eine Gehäuseplatte (10, 33) des Modulgehäuses (08, 31) zumindest eine Ausnehmung (39) aufweist, in der die Gehäuseplatte (10, 33) von der Lagerhülse (04) der Antriebsspindel (02) durchgriffen wird, wobei insbesondere die Ausnehmung (39) einen Schiebelagersitz bildet, in dem die Lagerhülse (04) axial verschiebbar ist und der die Mittelachse der Lagerhülse (04) radial auf die Aggregatsmittelachse (07) zentriert.

7. Spindelaggregat nach einem der Ansprüche 1 bis 6,
**dadurch gekennzeichnet,**
**dass** die Axialstellvorrichtung (05) in der Art eines pneumatischen Stellzylinders (14) mit einem, insbesondere zweiläufig, axial antreibbaren Antriebskolben (15) ausgebildet ist, wobei insbesondere das freie Ende einer am Antriebskolben (15) fixierten Kolbenstange (06) mit dem Gehäuse (16, 19) des Antriebsmotors (03) mechanisch verbunden ist.

8. Spindelaggregat nach Anspruch 7,
**dadurch gekennzeichnet,**
**dass** das Modulgehäuse den pneumatischen Stellzylinder und das Gehäuse des Antriebsmotors den pneumatischen Antriebskolben bildet, wobei insbesondere die Leitung zur Übertragung von Antriebsenergie zwischen dem Modulgehäuse und dem Antriebsmotor durch den pneumatischen Stellzylinder verläuft.

9. Spindelaggregat nach Anspruch 8,
**dadurch gekennzeichnet,**
**dass** zur drehfesten und axial verschiebbaren Lagerung des Antriebsmotors eine Stütznut in der zylindrischen Kolbenlauffläche des pneumatischen Stellzylinders vorgesehen ist, in die ein am Gehäuse des Antriebsmotors befestigtes Stützelement formschlüssig eingreift.

10. Spindelaggregat nach einem der Ansprüche 1 bis 9,
**dadurch gekennzeichnet,**
**dass** die pneumatische Steuerungseinheit zur Positionierung des Antriebskolbens im Stellzylinder am hinteren Ende des Modulgehäuses angeordnet ist, wobei der prismatische oder zylindrische Querschnitt der Steuerungseinheit mit dem prismatischen oder zylindrischen Querschnitt des Modulgehäuses fluchtet.

11. Spindelaggregat nach einem der Ansprüche 1 bis 10,
**dadurch gekennzeichnet,**
**dass** die elektronische Steuerungseinheit (50) des Antriebsmotors (03, 60, 66) am zugeordneten Gehäuse des zugeordneten Spindelaggregats (01, 30, 54) befestigt ist.

12. Spindelaggregat nach einem der Ansprüche 1 bis 11,
**dadurch gekennzeichnet,**
**dass** zur lagerichtigen Befestigung mehrerer Spindelaggregate (01, 30, 54) am Bearbeitungskopf (36, 47, 49) ein Modulgehäuseträger (38, 48) vorgesehen ist, auf dem die Spindelaggregate (36, 47, 49) einzeln in exakter Positionierung relativ zueinander befestigbar sind.

13. Spindelaggregat nach Anspruch 12,
**dadurch gekennzeichnet,**
**dass** zur Positionierung der Spindelaggregate (36, 47, 49) am Modulgehäuseträger (38, 48) für jedes Spindelaggregat (36, 47, 49) eine Ausnehmung (39) im Modulgehäuseträger (38, 48) vorgesehen ist, in der der Modulgehäuseträger (36, 47, 49) von der Lagerhülse (04) der Antriebsspindel (02) der einzelnen Spindelaggregate (36, 47, 49) durchgriffen wird, wobei insbesondere die Ausnehmung (39) im Modulgehäuseträger (38, 48) einen Schiebelagersitz bildet, in dem die Lagerhülse (04) radial geführt und axial verschiebbar ist.

14. Spindelaggregat nach Anspruch 12 oder 13,
**dadurch gekennzeichnet,**
**dass** zur Befestigung der Spindelaggregate (01, 30, 54) am Modulgehäuseträger (38, 48) für jedes Spindelaggregat (38, 48) zumindest zwei Ausnehmungen (40), insbesondere vier Ausnehmungen (40), am Modulgehäuseträger (38, 48) vorgesehen sind, an denen jeweils die Enden der Stabachsen (11, 12, 34) der Modulgehäuse (08, 31) befestigbar sind.

15. Spindelaggregat nach einem der Ansprüche 1 bis 14,
**dadurch gekennzeichnet,**
**dass** an Spindelaggregaten (30a, 54), die einen Werkzeugträger (51, 52, 53, 54) mit eigenem Antriebsmotor (60, 66) tragen, der eigene Antriebsmotor (03) entfernt ist und/oder dass die Rotationsachse eines an einem Werkzeugträger (51, 52, 53, 54) vorgesehenen Werkzeugs (61, 62) im rechten Winkel zur Aggregatsmittelachse (07, 55) des zugeordneten Spindelaggregats (30a, 54) im Bearbeitungskopf verläuft und/oder dass der Werkzeugträger (53) um die Aggregatsmittelachse (55) schwenkbar am Spindelaggregat (54) gelagert ist und/oder dass die Antriebsspindel (02) eines Spindelaggregats (54) am Werkzeugträger (53) in Eingriff kommt und der Werkzeugträger (53) durch Antrieb der Antriebsspindel (02) um die Aggregatsmittelachse (55) verschwenkt werden kann.

## Claims

1. A modular spindle unit for forming a multi-spindle machining head (36, 47, 49) for a machine tool, wherein the spindle unit (01, 30, 54) includes at least one drive spindle (02), to which a tool (37) or tool carrier (51, 52) is attachable, and wherein the spindle unit (01, 30, 54) includes a module housing (08, 31) in which the drive spindle (02) is mounted so as to be freely rotatable and axially displaceable, and wherein the module housing (08, 31) is attachable to the machining head (36, 47, 49) together with other module housings (08, 31), and wherein the spindle unit (01, 30, 54) includes at least one drive motor (03), with which a drive spindle (02) allocated thereto is drivable in rotary manner, and wherein the centre axis of the drive motor (03) and the centre axis of the drive spindle (02) extend coaxially and define a unit centre axis (07), and wherein the spindle unit (01, 30, 54) includes at least one axial actuating device (05), with which a drive spindle (02) allocated thereto is axially drivable in the direction of the unit centre axis (07), and wherein the centre axis of at least one axial actuating device (05) and the unit centre axis (07) extend coaxially, wherein the drive motor (03) is mounted in the module housing (08, 31) so as to be axially displaceable and can be displaced axially in the module housing (08, 31) along the unit centre axis (07) together with the drive spindle (02) by driving the axial actuating device (05),
**characterized in that**
a tool carrier (51, 52, 53, 54) is arranged on at least one spindle unit (30a, 54) of the machining head (49), wherein the tool carrier (51, 52, 53, 54) is axially displaceable with the axial actuating device (05) of the spindle unit (30a, 54), and wherein the tool carrier (51, 52, 53, 54) includes its own drive motor (60, 66), with which a tool (61, 62) is drivable in rotary manner..

2. The spindle unit as recited in claim 1,
**characterized in that**
the module housing (08, 31) includes two case plates (09, 10, 32, 33) at the two axial ends of the spindle unit (01, 30), and at least two rod axles (11, 12, 34), wherein the rod axles (11, 12, 34) particularly run parallel to the unit centre axis (07) and connect the two case plates to each other mechanically with a fixed distance therebetween.

3. The spindle unit as recited in either of claims 1 or 2,
**characterized in that**
at least two apertures are provided in the housing of the drive motor (03) for mounting the drive motor (03) so as to be rotationally fixed and axially displaceable, and which the rod axles (11, 12, 34) of the module housing (08, 31) pass through to form an axial mounting.

4. The spindle unit as recited in any of claims 1 to 3,
**characterized in that**
the spindle unit (30) includes a plurality of drive spindles (02), particularly two or four drive spindles (02), with a drive motor (03) allocated to each, and with an axial actuating device (05) allocated to each.

5. The spindle unit as recited in any of claims 1 to 4,
**characterized in that**
a bearing sleeve (04) is attached to the drive motor (03), in which the drive spindle (02) is mounted so as to be freely rotatable and/or axially fixed, wherein in particular the rotor axle (17) of the drive motor (03) is mounted in the bearing sleeve (04) so as to be freely rotatable and/or axially fixed.

6. The spindle unit as recited in claim 5,
**characterized in that**
a case plate (10, 33) of the module housing (08, 31) is furnished with at least one aperture (39), through which the bearing sleeve (04) of the drive spindle (02) passes through the case plate (10, 33), wherein in particular the aperture (39) forms a push-fit system, in which the bearing sleeve (04) is axially displaceable and which centres the centre axis of the bearing sleeve (04) radially with the unit centre axis (07).

7. The spindle unit as recited in any of claims 1 to 6,
**characterized in that**
the axial actuation device (05) is constructed in the manner of a pneumatic actuating cylinder (14) with a particularly dual-action, axially drivable drive piston (15), wherein in particular the free end of a piston rod (06) fixed to the drive piston (15) is mechanically connected to the housing (16, 19) of the drive motor (03).

8. The spindle unit as recited in claim 7,
**characterized in that**
the module housing serves as the pneumatic actuating cylinder and the housing of the drive motor serves as the pneumatic drive piston, wherein in particular the line for transferring drive energy between the module housing and the drive motor runs through the pneumatic actuating cylinder.

9. The spindle unit as recited in claim 8,
**characterized in that**
a support groove is provided in the cylindrical piston bearing surface of the pneumatic actuating cylinder, in which a bracing element fixed to the housing of the drive motor engages in positive locking manner so that the drive motor is mounted in a nonrotating and axially displaceable manner.

10. The spindle unit as recited in any of claims 1 to 9,
**characterized in that**
the pneumatic controller for positioning the drive piston in the actuating cylinder is arranged at the rear end of the module housing, wherein the prismatic or cylindrical cross section of the controller aligns with the prismatic or cylindrical cross section of the module housing.

11. The spindle unit as recited in any of claims 1 to 10,
**characterized in that**
the electronic controller (50) of the drive motor (03, 60, 66) is attached to the allocated housing of the allocated spindle unit (01, 30, 54).

12. The spindle unit as recited in any of claims 1 to 11,
**characterized in that**
a module housing carrier (38, 48) is provided for fixing multiple spindle units (01, 30, 54) in the correct position on the machining head (36, 47, 49), and to which the spindle units (01, 30, 54) are attachable individually being exactly positioned relative to each other.

13. The spindle unit as recited in claim 12,
**characterized in that**
an aperture (39) is provided for each spindle unit (36, 47, 49) in the module housing carrier (38, 48) for positioning the spindle units (36, 47, 49) on the module housing carrier (38, 48), through which aperture the bearing sleeve (04) of the drive spindle (02) of the individual spindle units (01, 30, 54) passes through the module housing carrier (36, 47, 49), wherein in particular the aperture (39) in the module housing carrier (38, 48) forms a push-fit system in which the bearing sleeve (04) is held in place radially and is axially displaceable.

14. The spindle unit as recited in either of claims 12 or 13,
**characterized in that**
at least two apertures (40), particularly four apertures (40) per spindle unit (38, 48) are provided on the module housing carrier (38, 48) for fixing the spindle units (01, 30, 54) to the module housing carrier (38, 48), and to which the respective ends of the rod axles (11, 12, 34) of the module housings (08, 31) are attachable.

15. The spindle unit as recited in either of claims 1 to 14,
**characterized in that**
in spindle units (30a, 54) including a tool carrier (51, 52, 53, 54) with its own drive motor (60, 66), the drive motor (03) is removed from the spindle unit, and/or the axis of rotation of a tool (61, 62) provided on a tool carrier (51, 52, 53, 54) is perpendicular to the unit centre axis (07, 55) of the allocated spindle unit (30a, 54) in the machining head, and/or the tool carrier (53) is mounted on the spindle unit (54) so as to be swivelable about the unit centre axis (55), and/or the drive spindle (02) of a spindle unit (54) engages with the tool carrier (53) and the tool carrier (53) can be swiveled about the unit centre axis (55) by driving the drive spindle (02).

## Revendications

1. Unité de broche modulaire pour la formation d'une tête d'usinage multibroche (36, 47, 49) pour une machine-outil, l'unité de broche (01, 30, 54) comprenant au moins une broche d'entraînement (02) à laquelle un outil (37) ou un porte-outil (51, 52) peut être fixé, et l'unité de broche (01, 30, 54) comprenant un boîtier modulaire (08, 31) dans lequel la broche d'entraînement (02) est montée de manière à pouvoir tourner librement et de manière à être axialement déplaçable, et le boîtier modulaire (08, 31) pouvant être fixé à la tête d'usinage (36, 47, 49) conjointement avec d'autres boîtiers modulaires (08, 31), et l'unité de broche (01, 30, 54) comprenant au moins un moteur d'entraînement (03) permettant l'entraînement en rotation d'une broche d'entraînement (02) associée, et l'axe central du moteur d'entraînement (03) et l'axe central de la broche d'entraînement (02) s'étendant coaxialement et définissant un axe central d'unité (07), et l'unité de broche (01, 30, 54) comprenant au moins un dispositif d'actionnement axial (05) permettant l'entraînement axial d'une broche d'entraînement (02) associée dans la direction de l'axe central d'unité (07), et l'axe central d'au moins un dispositif d'actionnement axial (05) et l'axe central d'unité (07) s'étendant coaxialement, le moteur d'entraînement (03) étant monté dans le boîtier modulaire (08, 31) de manière à être axialement déplaçable et pouvant être déplacé axialement dans le boitier modulaire (08, 31) le long de l'axe central d'unité (07) conjointement avec la broche d'entraînement (02) par l'entraînement du dispositif d'actionnement axial (05),
**caractérisée en ce qu'**
un porte-outil (51, 52, 53, 54) est agencé sur au moins une unité de broche (30a, 54) de la tête d'usinage (49), le porte-outil (51, 52, 53, 54) étant déplaçable axialement conjointement avec le dispositif d'actionnement axial (05) de l'unité de broche (30a, 54), et le porte-outil (51, 52, 53, 54) comprenant son propre moteur d'entraînement (60, 66) permettant l'entraînement en rotation d'un outil (61, 62).

2. Unité de broche selon la revendication 1,
**caractérisée en ce que**
le boîtier modulaire (08, 31) comprend deux plaques de boîtier (09, 10, 32, 33) aux deux extrémités axiales de l'unité de broche (01, 30) et au moins deux axes de barre (11, 12, 34), lesdits axes de barre (11, 12, 34) s'étendant en particulier en parallèle à l'axe central d'unité (07) et reliant les deux plaques de boîtier entre elles de façon mécanique et en réalisant un écart fixe entre celles-ci.

3. Unité de broche selon la revendication 1 ou 2,
**caractérisée en ce qu'**
au moins deux apertures sont prévues dans le boîtier du moteur d'entraînement (03) permettant le montage du moteur d'entraînement (03) de manière à être fixe en rotation et axialement déplaçable, et les axes de barre (11, 12, 34) du boîtier modulaire (08, 31) s'étendant à travers lesdites apertures en réalisant un montage axial.

4. Unité de broche selon l'une quelconque des revendications 1 à 3,
**caractérisée en ce que**
l'unité de broche (30) comprend une pluralité de broches d'entraînement (02), en particulier deux ou quatre broches d'entraînement (02), chacune ayant un moteur d'entraînement (05) associé et chacune ayant un dispositif d'actionnement axial (05) associé.

5. Unité de broche selon l'une quelconque des revendications 1 à 4,
**caractérisée en ce qu'**
une douille de palier (04) est fixée au moteur d'entraînement (03), dans laquelle la broche d'entraînement (02) est montée de manière à pouvoir tourner librement et/ou de manière à être axialement fixe, dans lequel en particulier l'axe du rotor (17) du moteur d'entraînement (03) est monté dans la douille de palier (04) de manière à pouvoir tourner librement et/ou de manière à être axialement fixe.

6. Unité de broche selon la revendication 5,
**caractérisée en ce qu'**
une plaque de boîtier (10, 33) du boîtier modulaire (08, 33) est dotée d'au moins une aperture (39) par laquelle la douille de palier (04) de la broche d'entraînement (02) passe à travers la plaque de boîtier (10, 33), dans lequel en particulier l'aperture (39) forme un siège de palier coulissant sur lequel la douille de palier (04) est axialement déplaçable et qui centre l'axe central de la douille de palier (04) radialement par rapport à l'axe central d'unité (07).

7. Unité de broche selon l'une quelconque des revendications 1 à 6,
**caractérisée en ce que**
le dispositif d'actionnement axial (05) est réalisé à la façon d'un cylindre d'actionnement pneumatique (14) présentant un piston d'entraînement (15), en particulier à double action, pouvant être entraîné axialement, dans lequel en particulier l'extrémité libre d'une tige de piston (06) étant fixée au piston d'entraînement (15) est reliée de manière mécanique avec le boîtier (16, 19) du moteur d'entraînement (03).

8. Unité de broche selon la revendication 7,
**caractérisée en ce que**
le boîtier modulaire sert de cylindre d'actionnement pneumatique et le boîtier du moteur d'entraînement sert de piston d'entraînement pneumatique, dans lequel en particulier la conduite pour le transfert d'énergie d'entraînement entre le boîtier modulaire et le moteur d'entraînement traverse le cylindre d'actionnement pneumatique.

9. Unité de broche selon la revendication 8,
**caractérisée en ce qu'**
une rainure de soutien est prévue dans la surface de glissement du piston cylindrique du cylindre d'actionnement pneumatique, dans laquelle un élément de soutien étant fixé au boîtier du moteur d'entraînement vient s'engrener par complémentarité de forme telle que le moteur d'entraînement puisse être monté de manière à être fixe en rotation et axialement déplaçable.

10. Unité de broche selon l'une quelconque des revendications 1 à 9,
**caractérisée en ce que**
le mécanisme de commande pneumatique pour le positionnement du piston d'entraînement dans le cylindre d'actionnement est agencé à l'extrémité arrière du boîtier modulaire, la section transversale prismatique ou cylindrique du mécanisme de commande s'alignant avec la section transversale prismatique ou cylindrique du boîtier modulaire.

11. Unité de broche selon l'une quelconque des revendications 1 à 10,
**caractérisée en ce que**
le mécanisme de commande électronique (50) du moteur d'entraînement (03, 60, 66) est fixé au boîtier associé de l'unité de broche (01, 30, 54) associée.

12. Unité de broche selon l'une quelconque des revendications 1 à 11,
**caractérisée en ce qu'**
un support du boîtier modulaire (38, 48) est prévu pour la fixation d'une pluralité d'unités de broche (01, 30, 54) dans leur position correcte sur la tête d'usinage (36, 47, 49), et sur lequel les unités de broche (01, 30, 54) peuvent être fixées individuellement l'une par rapport à l'autre dans un positionnement exacte.

13. Unité de broche selon la revendication 12,
**caractérisée en ce qu'**
une aperture (39) est prévue dans le support du boîtier modulaire (38, 48) pour chaque unité de broche (36, 47, 49) pour le positionnement des unités de broche (36, 47, 49) sur le support du boîtier modulaire (38, 48), la douille de palier (04) de la broche d'entraînement (02) des unités de broche (01, 30, 54) individuelles passant par ladite aperture à travers le support du boîtier modulaire (36, 47, 49), dans lequel en particulier l'aperture (39) dans le support du boîtier modulaire (38, 48) forme un siège de palier coulissant sur lequel la douille de palier (04) est guidée radialement et de manière à être axialement déplaçable.

14. Unité de broche selon la revendication 12 ou 13,
**caractérisée en ce qu'**
au moins deux apertures (40), en particulier quatre apertures (40), sont prévues pour chaque unité de broche (38, 48) sur le support du boîtier modulaire (38, 48) pour la fixation des unités de broche (01, 30, 54) au support du boîtier modulaire (38, 48), les extrémités respectives des axes de barre (11, 12, 34) des boîtiers modulaires (08, 31) pouvant être fixées auxdites apertures.

15. Unité de broche selon l'une quelconque des revendications 1 à 14,
**caractérisée en ce que**
dans les unités de broche (30a, 54) comprenant un porte-outil (51, 52, 53, 54) ayant son propre moteur d'entraînement (60, 66), le propre moteur d'entraînement (03) est enlevé et/ou l'axe de rotation d'un outil (61, 62) étant prévu sur un porte-outil (51, 52, 53, 54) s'étend perpendiculairement par rapport à l'axe central d'unité (07, 55) de l'unité de broche (30a, 54) associée dans la tête d'usinage, et/ou le porte-outil (53) est monté sur l'unité de broche (54) de manière à être pivotable autour de l'axe central d'unité (55), et/ou la broche d'entraînement (02) d'une unité de broche (54) vient s'engrener avec le porte-outil (53) et le porte-outil (53) peut être pivoté autour de l'axe central d'unité par l'entraînement de la broche d'entraînement (02).
